(19) Europäisches Patentamt
European Patent Office
Office européen des brevets

(11) **EP 3 810 695 B1**

(12) **EUROPEAN PATENT SPECIFICATION**

| | |
|---|---|
| (45) Date of publication and mention of the grant of the patent: **12.01.2022 Bulletin 2022/02** | (51) Int Cl.: **C08L 67/02** (2006.01) |
| (21) Application number: **20768165.1** | (86) International application number: **PCT/US2020/047348** |
| (22) Date of filing: **21.08.2020** | (87) International publication number: **WO 2021/035124** (25.02.2021 Gazette 2021/08) |

(54) **OPAQUE, NON-PEARLESCENT POLYESTER ARTICLES**

UNDURCHSICHTIGE, NICHT-PERLMUTTIERENDE POLYESTER-ARTIKEL

LES ARTICLES EN POLYESTER OPAQUES ET NON PERLÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA**

(30) Priority: **22.08.2019 US 201962890266 P**
**15.11.2019 US 201962936131 P**

(43) Date of publication of application:
**28.04.2021 Bulletin 2021/17**

(60) Divisional application:
**21210469.9**

(73) Proprietor: **Penn Color, Inc.**
**Doylestown, PA 18901 (US)**

(72) Inventors:
• **WIELOCH, Kelan**
 **Doylestown, PA 18901 (US)**
• **WALSH, James, C.**
 **Doylestown, PA 18901 (US)**
• **MILES, William**
 **Doylestown, PA 18901 (US)**
• **FARRELL, Thomas**
 **Doylestown, PA 18901 (US)**
• **CUDDIGAN, Julie**
 **Doylestown, PA 18901 (US)**
• **RUBILAR, Javiera**
 **Doylestown, PA 18901 (US)**
• **MYERS, Kenneth**
 **Doylestown, PA 18901 (US)**
• **SANDT, Andrew**
 **Doylestown, PA 18901 (US)**
• **ADAMS, Mark**
 **Doylestown, PA 18901 (US)**
• **BALL, Vincent J.**
 **Doylestown, PA 18901 (US)**
• **LARIANE, Youcef**
 **Doylestown, PA 18901 (US)**

(74) Representative: **J A Kemp LLP**
**80 Turnmill Street**
**London EC1M 5QU (GB)**

(56) References cited:
**EP-A1- 3 339 355   WO-A1-2019/133713**

## Description

### FIELD

The present disclosure generally relates to polyester articles, such as bottles or other containers, sheets, films or fibers, that have an opaque, non-pearlescent appearance and are made from compositions that contain little to no mineral filler.

### BACKGROUND

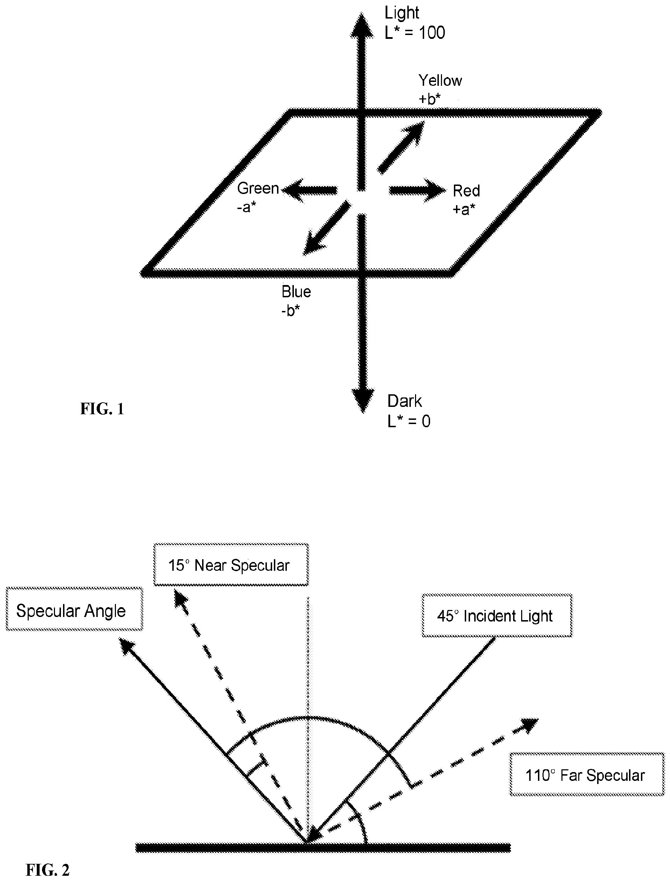

In the field of packaging, plastic has taken the place of other materials such as glass. This substitution minimizes breakage, reduces weight, and reduces energy consumed in manufacturing and transport. Attracting consumers to purchase individually-sized or family-sized containers includes branding and trade dress considerations with respect to the appearance of the product container. Modern consumer products demand eye-catching attention. Among the elements of a valuable appearance is the color of the container. Color can be described mathematically. For example, the CIELAB L*, a*, b* color space mathematically describes all perceivable colors in three dimensions: L* for lightness, a* for green-red, and b* for blue-yellow. *See* Hunter Lab, Applications Note, "Insight on Color," Vol. 8, No. 7 (2008). In the CIELAB color space, the L* axis runs from top to bottom. The maximum L* value is 100, which indicates a perfect reflecting diffuser (i.e., the lightest white). The minimum L* value is 0, which indicates a perfect absorber (i.e., the darkest black). Positive a* is red. Negative a* is green. Positive b* is yellow. Negative b* is blue. *See* Figure 1. CIELAB a* or b* values equal to 0 indicate no red-green or blue-yellow color appearance, in which case the article would appear pure white. In contrast, a* or b* values that deviate far from 0 indicate that light is non-uniformly absorbed or reflected. As a* or b* values deviate from 0, the color may no longer appear as bright white. One of the most important attributes of the CIELAB model is device independence, which means that the colors are defined independent of their nature of creation or the device they are displayed on.

The L*, a*, and b* values of the CIELAB color scale can be obtained using any CIELAB color measurement instrument and are calculated from known formulas. *See* Hunter Lab, Applications Note, "Insight on Color," Vol. 8, No. 7 (2008). With the L* value, the CIELAB model permits the quantification of how light a product actually is. Lightness is typically achieved by adding highly reflective and minimally absorbing components, such as titanium dioxide ($TiO_2$).

One aspect of the appearance of an article is whiteness, which can be desirable in some applications. For instance, a bright white color can advantageously reflect almost all light, thereby protecting the product inside the article from degradation caused by light. To obtain a bright white container, some packagers add colorants or opacifiers. However, additional colorants or opacifiers increase the cost of the container and may result in a swirled appearance (i.e., the colorant and/or opacifier would not appear to have fully dispersed within the composition), which may have a negative impact on a consumer's perception of the product. Opacifiers may also lead to unwanted physical properties due to high pigment content, reduced ability to recycle, and lower gloss. For blow molded bottles or thermoplastic parts, high levels of opacifiers can also lead to difficulty when reheating preforms due to the high reflectivity of infrared light. Thus, there is a need for improved articles having whiteness that is achieved without one or more of the above disadvantages associated with colorants and opacifiers.

Another aspect of the appearance of an article is opacity or light barrier, which can be desirable if there is a need to obscure the contents of a package or to prevent quality degradation of the packaged product during the period of time between packaging and consumption because light exposure can cause undesired changes to certain packaged goods. Milk, for example, can be damaged by photochemical and ionizing effects of light. Specifically, riboflavin photodegrades when exposed to light between 200 nm and 520 nm. This degradation can deleteriously affect the taste and odor of the milk. A light barrier restricts certain wavelengths of light from passing through container walls. Such a barrier or opacity can be achieved through reflection or absorption, which prevents the contents held within the container from deleterious effects. However, some methods for achieving light barrier are associated with undesirable trade-offs in performance and other features of the container.

For example, light blocking can be achieved through the incorporation of mineral fillers, such as $TiO_2$, which have been found to present several disadvantages. In polyester plastics, mineral fillers can lead to degradation of the polyester that can change processing characteristics and negatively impact physical properties, causing stress cracking, yellowness, and/or reduced top load. Mineral filler can also agglomerate and cause stress concentration points, leading to a loss of structural integrity, and causing filtration buildup that creates problems in recycling processes. Mineral fillers also add weight and increase density, which in turn increases cost. Additionally, mineral fillers can be highly abrasive to processing equipment, such as extruders, pull rollers, and internal processing parts such as gates, pins, and molds. Items containing mineral fillers can also be difficult to sort and recycle. Further, $TiO_2$, one of the most common mineral fillers used for plastics applications, has come under scrutiny regarding its potential carcinogenicity. A masterbatch of polymers that includes mineral filler may also result in uneven distribution of the mineral fillers that results in a swirled or color streaking appearance. Mineral fillers are also prone to release degradation components, such as ethylacrolein and other non-intentionally added substances (NIAS), and can have an adverse impact on weathering characteristics of the article. Thus, there is a need for improved articles having light barrier or opacity that is achieved with little to no mineral filler (e.g., $TiO_2$) and/or reduction or elimination of one or more of the above disadvantages associated with mineral fillers, such as $TiO_2$.

Another aspect of the appearance of an article is gonioappearance, which relates to the appearance of the article when subjected to changes in illumination or viewing angle. For example, an article with a non-pearlescent gonioappearance maintains a uniform color and appearance across all viewing angles. As such, non-pearlescent articles may be beneficial because they can provide uniform color consistency and brand recognition regardless of the viewing position of a consumer. Conversely, gonioapparent (e.g., pearlescent or metallic) articles show a color difference across viewing angles. Sometimes a gonioapparent appearance is desired, as pearlescent and metallic effects can be eye catching. However, such effects may also be disadvantageous, as reducing color uniformity may also reduce brand recognition.

Gonioappearance can be measured with a multi-angle spectrophotometer, such as an MAT12 from X-Rite. ASTM E2175 describes the standard practice for specifying the geometry of multi-angle spectrophotometers. Color difference may be calculated using CIELAB $DE_{CMC}$, which represents the magnitude of difference between a color and a reference (e.g., a pure white standard). The higher the $DE_{CMC}$ value, the more pronounced the difference in color. For example, when the reference is pure white, a smaller $DE_{CMC}$ value represents a color that is closer to white. Gonioappearance may also show directionality based on the orientation of the light to the internal voids (or pearlescent particles). For example, if internal voids of a PET bottle are elongated in the axial direction (from top to bottom of an injection stretch blow molded bottle) and not in the circumferential direction, the gonioappearance may be non-pearlescent when the light source is aligned orthogonal to the internal voids, but may be gonioapparent (e.g., pearlescent or metallic) when the light source is aligned parallel to the internal voids. Thus, as a non-pearlescent gonioappearance can be advantageous, there is a need for improved articles having a non-pearlescent gonioappearance that is achieved with little to no mineral filler (e.g., $TiO_2$) and/or reduction or elimination of one or more of the above disadvantages associated with mineral fillers, such as $TiO_2$.

WO 2019/133713 describes a white packaging article with a package wall containing a composition useful for blocking light in the spectrum ranges from about 200 nm to about 1200 nm. The composition has polyester, polymethylpentene, and a light scattering pigment. Each of the polymethylpentene and the light scattering pigment comprise about 0.1 to about 0.5 wt% of the wall.

**SUMMARY**

In one aspect, the disclosed technology relates to an orientedarticle including one or more layers, wherein at least one layer is a composition including: polyester; incompatible polymer selected from COC, partially or fully hydrogenated styrenic polymers and copolymers, and combinations thereof; and 0-8 wt% light scattering pigment, based on the total weight of the composition; wherein the article is oriented, the layer has an average light transmission percentage of about 20% or less for light having wavelengths in the range of 400nm to 700nm, and the layer has a non-pearlescent appearance of less than 15 units, measured as $DE_{CMC}$ with a 45° incident light source between 15° near-specular reflection and 110° far specular reflection. In some embodiments, the layer has a non-pearlescent appearance of less than 10 units, measured as $DE_{CMC}$ with a 45° incident light source between 15° near-specular reflection and 110° far specular reflection. In some embodiments, the incompatible polymer has a Vicat Softening Point that is higher than the orientation temperature of the article, wherein the Vicat Softening Point is measured according to ASTM D1525 with a 1 kg load and a 50°C/hour heating rate. In some embodiments, the layer is white and has a CIELAB a* value within the range of ±10 units, and a CIELAB b* value within the range of ±10 units. In some embodiments, the polyester is polyethylene terephthalate (PET). In some embodiments, the composition includes at least 85 wt% polyester, based on the total weight of the composition. In some embodiments, the incompatible polymer includes a hydrogenated styrenic polymer. In some embodiments, the incompatible polymer includes COC.

In some embodiments, the composition includes about 15 wt% or less incompatible polymer, based on the total weight of the composition. In some embodiments, the composition comprises no titanium dioxide. In some embodiments, the composition comprises no more than 1 wt% of mineral filler, based on the total weight of the composition. In some embodiments, the light scattering pigment includes zinc sulfide present in an amount of about 4 wt% or less, based on the total weight of the composition. In some embodiments, the composition includes titanium dioxide. In some embodiments, the composition includes no more than 0.1 wt% light scattering pigment, based on the total weight of the composition.

In some embodiments, the composition further includes an additive or colorant. In some embodiments, the composition includes an additive selected from anti-block agents, anti-oxidants, anti-stats, slip agents, chain extenders, cross linking agents, flame retardants, IV reducers, laser marking additives, mold release, optical brighteners, flow aids, colorants, plasticizers, pigment, dyes, nucleating agents, oxygen scavengers, anti-microbials, UV stabilizers, and combinations thereof. In some embodiments, the composition includes a colorant selected from dyes, organic pigments, inorganic pigments, and combinations thereof. In some embodiments, the colorant includes aluminum. In some embodiments, the colorant includes a combination of dyes. In some embodiments, the article is a container.

In another aspect, the disclosed technology relates to a method of manufacturing an article, including the steps of: (a) melt blending polyester with incompatible polymer selected from COC, partially or fully hydrogenated styrenic polymers and copolymers, and combinations thereof to produce a composition including about 15 wt% or less of incompatible polymer, based on the total weight of the composition; (b) subjecting the composition to orientation stress at a temperature below the Vicat Softening Point of the incompatible polymer, wherein the Vicat Softening Point is measured according to ASTM D1525 with a 1 kg load and a 50°C/hour heating rate; and (c) producing an article that is visually non-pearlescent and has a light transmission percentage of less than 20% for light having wavelengths in the range of 400nm to 700nm. In some embodiments, at least one additive or colorant is added to the composition during step (a).

In another aspect, the disclosed technology relates to an oriented white article including one or more layers, wherein at least one layer is a composition including, based on the total weight of the composition: at least 91.5 wt% polyethylene terephthalate (PET); less than 4 wt% incompatible polymer selected from COC and hydrogenated styrenic polymers; less than 4 wt% mineral filler selected from titanium dioxide ($TiO_2$) and zinc sulfide (ZnS); and less than 0.5 wt% additional component selected from colorants and additives; wherein the article is oriented; the article has a light transmission percentage of less than 20% for light having wavelengths in the range of 400nm to 700nm; the layer has a non-pearlescent appearance of less than 10 units measured as $DE_{CMC}$ with a 45° incident light source between 15° near-specular reflection and 110° far specular reflection; and the layer has a CIELAB a* value within the range of $\pm 10$ units, and a CIELAB b* value within the range of $\pm 10$ units. In some embodiments, the composition includes less than 1 wt% $TiO_2$ and less than 3 wt% ZnS.

In another aspect, the disclosed technology relates to an oriented article including one or more layers, wherein at least one layer is a composition including, based on the total weight of the composition: at least 91.5 wt% polyethylene terephthalate (PET); less than 4 wt% incompatible polymer selected from COC and hydrogenated styrenic polymers; less than 4 wt% zinc sulfide (ZnS); and less than 0.5 wt% additional component selected from colorants and additives; wherein the composition does not contain titanium dioxide; the article is oriented; the article has a light transmission percentage of less than 20% for light having wavelengths in the range of 400nm to 700nm; and the layer has a non-pearlescent appearance of less than 10 units measured as $DE_{CMC}$ with a 45° incident light source between 15° near-specular reflection and 110° far specular reflection.

In another aspect, the disclosed technology relates to an oriented article including one or more layers, wherein at least one layer is a composition including, based on the total weight of the composition: at least 91.5 wt% polyethylene terephthalate (PET); about 1 wt% to about 5 wt% incompatible polymer selected from COC and hydrogenated styrenic polymers; about 1 wt% to about 3 wt% polymethylpentene (PMP); and less than 0.5 wt% additional component selected from colorants and additives; wherein the composition does not contain titanium dioxide or zinc sulfide; the article is oriented; the article has a light transmission percentage of less than 20% for light having wavelengths in the range of 400nm to 700nm; and the layer has a non-pearlescent appearance of less than 10 units measured as $DE_{CMC}$ with a 45° incident light source between 15° near-specular reflection and 110° far specular reflection. In some embodiments, the additional component includes a non-mineral selected from aluminum and organic dyes.

## BRIEF DESCRIPTION OF THE DRAWINGS

**Figure 1** is a diagram of the CIELAB L*, a*, b* color space.
**Figure 2** is a diagram of an example multi-angle color measurement for determining the gonioappearance of an article using a 45° incident light source and measuring color at near-specular (15°) and far specular (110°) angles.
**Figure 3** is an illustration of a mixture of immiscible polymers (matrix polymer and incompatible polymer).
**Figure 4** is an illustration of a mixture of immiscible polymers (matrix polymer and incompatible polymer) after orientation stress.
**Figure 5** is an optical microscopy image of a non-pearlescent article.
**Figure 6** is an optical microscopy image of a pearlescent article.

## DETAILED DESCRIPTION

The present disclosure relates to polyester articles having improved opacity (light barrier), a non-pearlescent appearance across a range of viewing angles, and a reduced or eliminated loading of mineral filler. In some embodiments, the opaque, non-pearlescent polyester articles have a brighter, whiter appearance (higher L* value) and/or low loading levels of incompatible polymers.

The following discussion includes various embodiments that do not limit the scope of the appended claims. Any examples set forth herein are intended to be non-limiting and merely illustrate some of the many possible embodiments of the disclosure. Further, particular features described herein can be used in combination with other described features in each of the various possible combinations and permutations. Unless otherwise specifically defined herein, all terms are to be given their broadest reasonable interpretation including meanings implied from the specification as well as meanings understood by those skilled in the art and/or as defined in dictionaries, treatises, etc. It must also be noted that, as used in the specification and claims, the singular forms "a," "an," and "the" include plural referents unless otherwise specified, and that the terms "includes" and/or "including," when used in this specification, specify the presence of stated features, steps, elements, and/or components, but do not preclude the presence or addition of one or more other features, steps, elements, components, and/or combinations thereof.

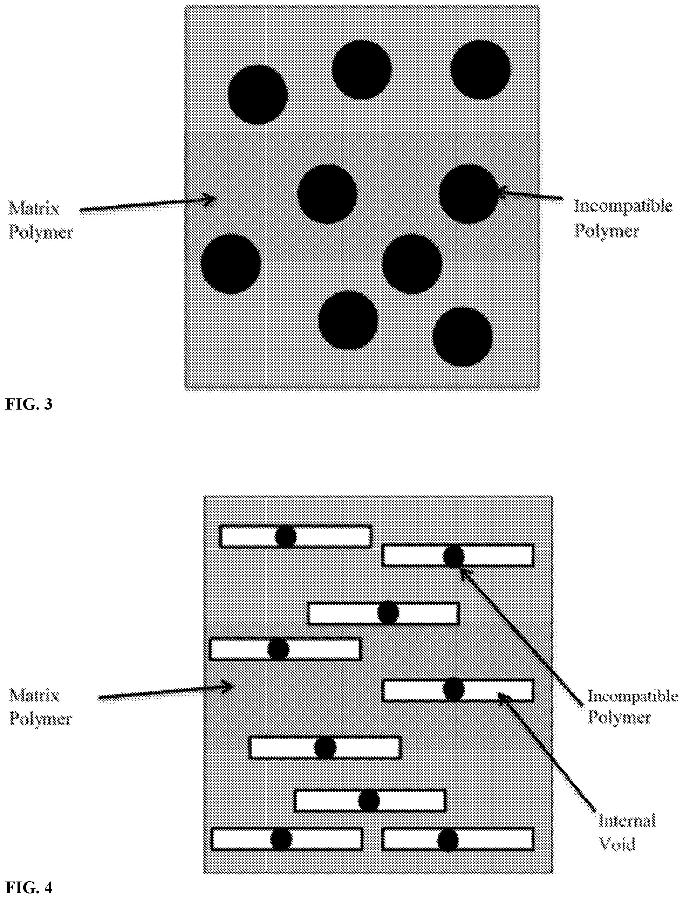

The disclosed articles are made from phase-separated mixtures or compositions containing immiscible polymers, in which an incompatible polymer is mixed with a matrix polymer, as depicted in Figure 3. Without being bound to any particular theory, it is believed that when compositions of these phase-separated mixtures are subject to orientation stress (e.g., blow molding, biaxial sheet orientation, monoaxial stretching, thermoforming, fiber spinning, etc.), droplets of the minor immiscible component (the incompatible polymer) may elongate and create plate-like structures. If the incompatible polymer and the matrix polymer have different indexes of refraction, the plate-like structures result in a gonioapparent (e.g., pearlescent or metallic) appearance. Additionally, if the incompatible polymer remains rigid during orientation stress, the incompatible components may not entirely flatten. Instead, the incompatible polymer may decouple from the matrix, thereby creating internal voids that elongate as the matrix polymer is stretch oriented. If the incompatible polymer is sufficiently rigid, it may support an expanding internal void structure. A multitude of dispersed incompatible polymer domains thus creates internal overlapping voids within the matrix polymer, as depicted in Figure 4. These voids create a multitude of light scattering surfaces that reflect light in a non-uniform manner, resulting in a gonioapparent (e.g., pearlescent or metallic) effect where the color difference across viewing angles differs significantly.

The articles disclosed herein may comprise one or more layers, wherein at least one layer comprises a composition that includes a polymer blend of matrix polymer and incompatible polymer and optionally additional components. The disclosed articles may comprise various forms, including but not limited to a finished product, a multi-layer structure, or a layer (e.g., an outer layer) of a multi-layer structure. For example, injection stretch blow molded articles (such as bottles) may include a clear polyester skin, or another colorant or functional skin layer to enhance the aesthetics of the product. Such an article can have a desirable opaque, non-pearlescent appearance when one or more of the skins or layers comprises a composition disclosed herein. For films or other injection stretch blow molded articles, nylon may be added as an oxygen barrier layer adjacent to a layer of the disclosed composition or within a layer of the disclosed composition as a reactive oxygen scavenger. In some embodiments, the incompatible polymer can be employed in one layer and a colorant can be employed in another separate layer. In some embodiments, an incompatible polymer-containing outer layer can hide a layer containing light absorbing colorants so as to enhance light blocking and still maintain a white appearance in a multi-layer structure. In other words, a layer having a composition disclosed herein that exhibits certain advantageous properties (e.g., opacity, non-pearlescent, optionally whiteness) would impart those advantageous properties to an article when employed as an outer layer (such as, but not necessarily, and outermost layer) of the article.

The compositions disclosed herein reduce or eliminate the use of mineral fillers (e.g., $TiO_2$) that can cause degradation of polyester, such as PET. As a result, the disclosed articles are more easily recyclable into bottles, fibers, or thermoformed parts.

**Polyester Polymer**

The disclosed compositions include a major polymeric component that is a polyester matrix resin (also interchangeably referred to herein as the polyester polymer or matrix polymer), which can be any polyester suitable for manufacturing bottles or other containers, sheets, films, thermoformed parts, fibers, or other types of articles. Non-limiting examples of suitable polyester polymers for use in compositions for making the disclosed articles include polyester terephthalate (PET), PET homopolymers, PET copolymers with glycol, PET copolymers with cyclohexanedimethanol (CHDM), PET copolymers with isophthalic acid (IPA), polylactic acid (PLA), polybutylene terephthalate (PBT), polytrimethylene terephthalate (PTT), polycyclohexylenedimethylene terephthalate (PCT), polyethylene naphthalate (PEN), polyethylene furanoate (PEF), and combinations thereof.

The polyester polymer comprises the majority of the composition. In some embodiments, the composition includes polyester polymer (e.g., PET) in an amount of at least 85 wt%, at least 88 wt%, at least 89 wt%, at least 90 wt%, at least 91 wt%, at least 91.5 wt%, at least 92 wt%, at least 93 wt%, at least 94 wt%, at least 95 wt%, at least 96 wt%, at least 97 wt%, or at least 98 wt%, based on the total weight of the composition (e.g., a layer of a finished article, as further described below).

**Incompatible Polymer**

The disclosed compositions include "incompatible polymer," which refers to a minor polymeric component that forms phase-segregated domains in the matrix polymer under heat and shear conditions of an extruder. The incompatibility and size of the phase-segregated domains can be driven by differences in molecular weight, rheology, chemical composition, surface energy and processing conditions such as shear, temperature, humidity, among others. Non-limiting examples of suitable incompatible polymers for use in compositions for making the disclosed articles include polymethylpentene (PMP), cyclic olefin copolymers, cyclic olefin polymers, partially or fully hydrogenated styrenic polymers, and combinations thereof. As used herein, the term "COC" refers to both cyclic olefin copolymers and cyclic olefin polymers. In some embodiments, the incompatible polymer is not PMP, or PMP is not the only incompatible polymer in the composition. In other words, in some embodiments, PMP is only included in the composition in combination with another incompatible polymer, such as a COC or hydrogenated styrenic polymer.

While incompatible polymers may be added to improve opacity, it has been conventionally expected that incompatible polymers will create a lustrous or pearlescent appearance after orientation, and that a light scattering mineral filler, such as $TiO_2$, is required to mitigate such an effect. However, the incompatible polymers for use in the disclosed compositions are selected based on their physical properties that enable both high opacity and a non-pearlescent appearance when biaxially stretched. Accordingly, the disclosed compositions may be prepared with a reduction or elimination of mineral filler, which thus provides one or more significant benefits, such as lower density, improved recyclability, improved regulatory compliance, and less degradation due to shear or moisture.

In some embodiments, incompatible polymers for use in connection with the disclosed technology have low surface energy and high Vicat Softening Point. The Vicat Softening Point, also known as Vicat hardness, is the softening point temperature for materials that have no definite melting point, and can be considered as an indicator of rigidity. In some embodiments, the incompatible polymer has a Vicat Softening Point greater than the orientation temperature of the polymer blend - i.e., a composition containing both matrix polymer and incompatible polymer. Since the Vicat Softening Point of the incompatible polymer impacts pearlescence and opacity, different grades of incompatible polymer could be combined to adjust both opacity and non-pearlescence to the desired level.

In some embodiments, melt mixing a minor amount of incompatible polymer with a majority amount of polyester in an extruder and orienting the polymer blend composition at a temperature below the Vicat Softening Point of the incompatible polymer creates an opaque white article that, surprisingly, has a non-pearlescent appearance without the need for additional light scattering pigments, such as $TiO_2$.

Advantageously, it has been found that COC and hydrogenated styrenics, unlike other olefin polymers, can solubilize dyes and act as a carrier polymer for a masterbatch without the dyes bleeding or migrating out of the masterbatch.

Cyclic olefin copolymers include copolymers of ethylene and norbornene or ethylene and tetracyclodecene. For example, some such polymers are commercially available from Polyplastics as TOPAS® (COC), Zeonex as ZEONOR® (COC), and Mitsui as APEL™ (COC). The grades available from Zeonex are referred to as cyclic olefin polymers due to the difference in polymerization and a subsequent hydrogenation process. Other examples of COC include grade TOPAS® 5013F-04 available from Polyplastics, which may be used in some embodiments within a polyester terephthalate (PET) matrix for injection stretch blow molding (ISBM) because TOPAS® 5013F-04 has a Vicat Softening Point of 133°C, which is above the approximate 95°C to 120°C orientation temperature of PET in an ISBM process. Conversely, TOPAS® 8007F-04, another COC available from Polyplastics, has a relatively low Vicat Softening Point of 80°C, and does not produce either opacity or a non-pearlescent appearance under the same orientation conditions.

Hydrogenated styrenics include, for example, fully hydrogenated styrene butadiene copolymers commercially available from Mitsui under the trade name VIVION™. Grade VIVION™ 1325 is a fully hydrogenated styrene-butadiene copolymer available from Mitsui and has a Vicat Softening Point of 123°C, which is suitable to produce opaque articles having a non-pearlescent appearance from PET oriented by ISBM. Other non-limiting examples of suitable hydrogenated styrenics include fully hydrogenated polystyrene (also known as polycyclohexylethylene or polyvinylcyclohexane), fully or partially hydrogenated styreneisoprene copolymers, other partially or fully hydrogenated styrenic copolymers, and combinations thereof. VIVION™ 8210 is a fully hydrogenated styrenic cyclic block copolymer with a relatively low Vicat Softening Point of 105°C, which falls within the range of the PET orientation temperature during ISBM and thus may result in a gonioapparent (pearlescent) article having higher light transmission.

In some embodiments, the degree of hydrogenation of hydrogenated polystyrenic copolymers is adjusted to increase the Vicat Softening Point in order to form an article with greater opacity and/or a non-pearlescent appearance. Hydrogenated polystyrenic copolymers are also stable in melt processing, improving repeated recyclability of the polyester articles made therefrom. Also, as shown in Example 4 below, hydrogenated polystyrenic copolymers do not plateau in opacity even at very high loading levels, unlike PMP which was shown to level off at about 4.5% light transmission without further reduction with increased PMP loading. Further, hydrogenated polystyrenic copolymers have color stability over time, even after multiple extrusion passes and UV exposure.

Suitable incompatible polymers may be added to the polyester polymer by dry mixing pellets and feeding them into the hopper of an extruder. Alternatively, the incompatible polymer may be pre-blended with other additives or colorants in the form of a masterbatch that is added to the polyester polymer.

In the disclosed articles, opacity and whiteness can be achieved with relatively small loadings of the incompatible polymer in the composition - e.g., about 1 wt% or less, about 2 wt% or less, about 3 wt% or less, about 4 wt% or less, about 5 wt% or less, about 6 wt% or less, about 7 wt% or less, about 8 wt% or less, about 9 wt% or less, about 10 wt% or less, about 11 wt% or less, about 12 wt% or less, about 13 wt% or less, about 14 wt% or less, about 15 wt% or less, about 1 wt% to about 15 wt%, about 1 wt% to about 10 wt%, about 1 wt% to about 5 wt%, about 1 wt% to about 3 wt%, about 2 wt% to about 15 wt%, about 2 wt% to about 10 wt%, or about 2 wt% to about 5 wt%, based on the total weight of the composition (e.g., the total weight of a layer comprising the disclosed composition as provided in a bottle or other article). Producing articles with a relatively low amount of incompatible polymer can lead to density reduction of the article, advantageously lowering the overall weight and cost of the article. In some embodiments, the density of the article or layer thereof is about 1.3 g/cm$^3$ or less, about 1.2 g/cm$^3$ or less, or about 1.1 g/cm$^3$ or less, which reduces weight of the article and saves cost and material consumption.

In some embodiments, the composition does not include any one or more of the following, which may otherwise be considered incompatible polymers: polypropylene, high density polyethylene, low density polyethylene, or linear low density polyethylene. Such polymers generally require a high loading level (e.g., more than 15 wt%) to generate opacity; and higher loading can have a negative impact on physical properties and lead to higher cost.

In some embodiments, the composition does not include any one or more of the following, which may otherwise be considered incompatible polymers: polystyrene, polymethylmethacrylate, polyvinylchloride, or polymethylpentene. Such polymers may degrade at some polyester processing temperatures to generate unintended substances such as styrene monomer or valeric acid, which can be toxic or alter the taste and/or odor of a product (e.g., food or beverage) contained inside the article.

Factors that may influence the dispersion of the incompatible polymer may be related to material properties, such as refractive index difference, viscosity ratio, and interfacial tension. These properties can be adjusted with additives such as internal lubricants, compatibilizers, or cross linking agents.

Both cyclic olefin copolymers and hydrogenated styrenics have a high barrier to water vapor and very low absorption. This may lead to enhanced barrier performance for water vapor loss. Also, incompatible polymers have little to no impact on oxygen scavenging capacity (i.e., ability of an article to absorb oxygen from the surrounding environment and prevent it from diffusing through the article) or oxygen scavenging catalysts, such as cobalt. Without being bound by a particular theory, the incompatible polymer may act as a degradable polymer in an oxygen scavenging system. Further, in some embodiments, the incompatible polymers used in the disclosed compositions do not degrade under PET processing conditions, in which case there is little to no generation of non-intentionally added substances (NIAS).

Barrier to gases like oxygen and carbon dioxide is also important for content protection. With an insufficient gas barrier, carbonated beverages can lose carbon dioxide and become flat. Oxygen can degrade food products and cause rancidity. Methods to improve oxygen barrier for polyester, such as PET, may include the use of a cobalt catalyst in the presence of a degradable polymer as an active barrier. Active barriers, such as oxygen scavengers, are consumed and eventually stop being effective. Passive barriers can be more beneficial because they are generally not consumed and can be used in combination with active barriers. Mixtures of polyesters and incompatible polymers as disclosed herein may improve the passive barrier to oxygen, carbon dioxide, or other gases. Addition of the incompatible polymers disclosed herein may also improve one or more physical properties of the finished articles, such as burst strength, top load, stress cracking, tensile modulus, tensile strength, delamination resistance, fiber tenacity, crush strength, and bend resistance.

**Additional Components**

One or more additional components (e.g., additives, colorants) may optionally be included in the disclosed compositions for use in making opaque, non-pearlescent polyester articles. Non-limiting examples of suitable additives include anti-block agents (e.g., silica), anti-oxidants (e.g., primary phenolic anti-oxidant IRGANOX® 1010), anti-stats (e.g., glycerol monostearate), slip agents (e.g., erucamide), chain extenders (e.g., carbonyl biscaprolactam), cross linking agents (e.g., pyromellitic dianhydride), flame retardants (e.g., alumina trihydrate), IV reducers (e.g., AMP-95™), laser marking additives (e.g., IRIOTEC® 8835), mold release (e.g., calcium stearate), optical brighteners (e.g., Optical Brightener OB-1), flow aids (e.g., DAIKIN PPA DA-310ST), plasticizers (e.g., polyester copolymers), nucleating agents (e.g., talc), oxygen scavengers (e.g., OXYCLEAR®), anti-microbials (e.g., triclosan), UV stabilizers (e.g., TINUVIN 234), acetaldehyde scavengers (e.g., anthranilamide), coupling agents (e.g., OREVAC® 18507), compatibilizers (e.g., OREVAC® CA 100), non-mineral fillers such as cross linked silicone (e.g., TOSPEARL 1110A), cross linked polystyrene (TECHPOLYMER SBX-8) or cross linked PMMA (GANZPEARL GMX-0610), mineral fillers (e.g., $TiO_2$), and combinations thereof.

In some embodiments, the composition may contain little to no mineral filler, such as $TiO_2$ or ZnS. For example, the composition may contain mineral filler (e.g., $TiO_2$ or ZnS) in an amount of about 4 wt% or less, about 3 wt% or less, about 2 wt% or less, about 1 wt% or less, about 0.5 wt% or less, or 0 wt%, based on the total weight of the composition.

One or more colorants may optionally be included in the disclosed compositions for use in making opaque, non-pearlescent polyester articles. Non-limiting examples of suitable colorants include: dyes (e.g., solvent red 135), organic pigments (pigment blue 15:1), inorganic pigments (e.g., iron oxide pigment red 101),, effect pigments (e.g., aluminum flake), and combinations thereof. Pigments, such as $TiO_2$ or other inorganic or organic pigments, may also be used in the compositions to color the article or a layer thereof. Colorants can enhance the opacity of an article or a layer thereof by creating additional scattering sites and/or by absorbing light at particular wavelengths, such as visible, UV, and IR.

In some embodiments, the composition may contain an impurity, such as a polymer that degrades under the processing conditions of the polyester in a low amount of 0 wt% to 1.0 wt%, such as 0 wt% to 0.5 wt%, based on the total weight of the composition. For example, contemplated impurities include polystyrene (PS), styrene acrylonitrile (SAN), acrylonitrile butadiene styrene (ABS), polyvinylchloride (PVC), thermoplastic polyurethane (TPU), inert mineral fillers (e.g., calcium carbonate ($CaCO_3$)), catalyst residue (e.g., antimony or titanium), or a combination thereof. Impurities are not preferred but may be tolerated in low amounts. Miscible polyester blends, such as PET and PBT, PET and PETG, or PET and PTT are not considered impurities for the purposes of the present disclosure.

**Articles**

The articles disclosed herein may comprise one or more layers, wherein at least one layer comprises a disclosed composition. As used herein, a "layer" refers to a macro-scale layer of the material forming an article. In some embodiments, a layer has a thickness of about 0.05 mm to about 5 mm, about 0.1 mm to about 3 mm, or about 0.2 mm to about 2 mm. In some embodiments, the layer comprises a side wall of an article. Weight percentages of components included in the disclosed compositions are described as being based on the total weight of the composition, which is the same as being based on the total weight of the layer in which the composition is present, rather than being based on the total weight of the whole article (unless, of course, the whole article is formed of a single layer).

Non-limiting examples of suitable articles include bottles and other containers, sheets, films, thermoformed parts, fibers, and packages for containing various consumer products. In some embodiments, the article may have an internal volume of about 10 ml to about 5000 ml, about 50 ml to about 4000 ml, about 100 ml to about 2000 ml, about 200 ml to about 1000 ml, or about 10 ml to about 250 ml.

After orientation of the composition, the resulting article (or a layer thereof) is opaque and has a non-pearlescent appearance. Additional components, such as pigments and/or dyes, may be included in the article without disrupting its non-pearlescent appearance. Consequently, the article may be produced to have a desired color and opacity without including any mineral fillers, or including only minimal mineral fillers, in the composition. In some embodiments, the article exhibits the desired, color, opacity and non-pearlescence using dyes but no pigments in the composition.

In some embodiments, the disclosed articles have an opaque, non-pearlescent appearance and no pigments. Eliminating $TiO_2$ or other pigments can lead to improved recyclability due to less degradation of the polyester and no pigment agglomeration. Additionally, articles that contain no mineral filler or particulates have a lower density and lower overall weight, which leads to lower cost.

**Manufacturing Methods**

The present disclosure also relates to methods of manufacturing articles from the compositions disclosed herein. Some such methods include "blow molding," which refers to a manufacturing process by which hollow cavity-containing articles are formed. The blow molding process begins with melting or at least partially melting or heat-softening a thermoplastic composition (e.g., masterbatch pellets, pellets containing a disclosed composition, etc.), and forming it into a preform that can then, in turn, be formed into an article by a molding or shaping step, such as extrusion through a die head, injection molding, and the like. In general, a preform is a test tube-like piece of plastic with a hole in one end through which compressed gas can pass. The preform may be clamped into a mold while air is pumped into it, sometimes coupled with mechanical stretching of the preform (known as "stretch blow-molding"). The preform may be preheated before air is pumped into it. The air pressure pushes the thermoplastic outward to conform to the shape of a mold in which the preform is contained. Once the plastic has cooled and stiffened, the mold is opened and the expanded part (an article) is removed. In general, there are three main types of blow molding: extrusion blow molding (EBM), injection blow molding (IBM), and injection stretch blow molding (ISBM).

In some embodiments, the disclosed articles may be manufactured by a method that includes the steps of melt blending polyester polymer and incompatible polymer through an extruder to form a preformed part or preform, and then orienting the preform at a temperature below the Vicat Softening Point of the incompatible polymer to form a final article having an opaque and non-pearlescent appearance. Without being limited by a particular theory, it is believed that the incompatible polymer forms independent and distinct phases within the polyester matrix. When the polyester is oriented below the Vicat Softening Point of the incompatible polymer, the dispersed phase (the incompatible polymer) remains rigid and creates internal voids within the polyester. These voids scatter light, resulting in whiteness and opacity. It is possible that some of the dispersed domains of the incompatible polymer do not void, and act as light scattering centers that broaden the light reflection and minimize the gonioapparent (e.g., pearlescent or metallic) appearance arising from the voids. Additionally, the effect of orientation can change color characteristics of an article in the locations that are oriented. That is, orientation is believed to create internal voids, which act as light scattering areas that change the appearance of the article such that different stretch ratios will lead to a different color appearance.

As used herein, "oriented" refers to an article that has been subject to a processing method for orientation. Non-limiting examples of suitable orientation processing methods include: single state injection stretch blow molding (where preforms are injection molded, equilibrated to a target temperature, and then stretched), two-stage injection stretch blow molding (where preforms are injection molded, fully cooled and stored, then fully reheated before being blown and oriented into a bottle or other shape), extrusion blow molding (where the polymer blend composition is melted and formed into a parison or preform in the melt phase, and then oriented before being fully cooled), single direction film orientation (where a sheet is formed and the stretched either in a tenter frame using clips or by using differential speed rolls and nips), biaxial sheet orientation (where a sheet is formed and then stretched sequentially using differential roll speeds followed by tenter clips on diverging rails), biaxial tubular orientation (where an annular die forms a tube which is temperature adjusted and then supported by air pressure to expand the tube to a larger size), amorphous or crystalline thermoforming (where a sheet is produced and then formed in a mold using, e.g., pressure or vacuum assist), fiber orientation (where melt extruded polymers are formed into a yarn through a spinarette which can be partially or fully oriented).

Orientation can be performed in a single direction (uniaxial) or multiple directions (biaxial). In some embodiments involving uniaxial orientation, the orientation is about 3x or higher. In some embodiments involving biaxial orientation, the total area draw ratio (first direction times second direction), is about $7.0x^2$ or higher, about $8.0x^2$ or higher, about $9.0x^2$ or higher, about $10.0x^2$ or higher, or about $7x^2$ to about $12x^2$. In general, higher orientation leads to higher opacity due to void creation and void growth.

Gonioppearance may be influenced by reflection and refraction from internal inclusions having a high aspect ratio, similar to the effect caused by pearlescent particles (e.g., $TiO_2$-coated mica). The influence on gonioappearance by pearlescent particles depends on the size, shape, orientation, reflection, absorption, refraction, and/or scattering effects of those particles. Incompatible polymers may behave in a similar manner, except that instead of plate-like polymer domains, orientation can cause the dispersed incompatible polymer to form internal voids that have a high aspect ratio, which can result in a pearlescent appearance. In contrast, low aspect ratio voids and small size domains of a dispersed incompatible polymer may scatter light and lead to a non-pearlescent appearance. The characteristics of both the matrix polymer and the incompatible polymer can influence the size and shape of the voids, which can thereby influence the gonioappearance of the article.

The temperature of orientation can be adjusted, but typically falls within ranges suitable for the matrix polymer. For example, typical bottle grade PET with an intrinsic viscosity (IV) of about 0.80 dl/g can undergo orientation at temperatures in the range of 90°C to 130°C, preferably in the range of 95°C to 120°C. Orienting at too low of a temperature can lead to stress-induced crazing, and orienting at too high of a temperature can lead to premature crystallization. For multi-layer articles, processing conditions can be isolated and customized for one or more layers to influence the gonioappearance of each layer independently.

Additionally, due to the manner of reheating, there may be temperature differences within different portions of a preform or pre-stretched article. If the preform is heated with infrared (IR) light, the amount of reflection or absorption at the surface facing the IR light may be higher than at the surface that does not face the IR light. Unwanted crystallization can occur in portions of the preform that absorb too much IR light. Uniform temperature throughout a preform or pre-stretched article is thus advantageous, and permits a wider processing window. The disclosed technology is thus particularly beneficial for use in manufacturing methods that require reheating, particularly IR reheating. Mineral fillers scatter and reflect light, reducing the effectiveness of IR reheating. Such a problem can be avoided by minimizing or eliminating the amount of mineral filler used to make the disclosed articles. Further, since opacity is not achieved until after orientation, the preform formed prior to orientation has significantly less light scattering and less reflectivity. Thus, IR light will penetrate the preform more effectively prior to orientation.

Additionally, it was surprisingly found that the mineral filler zinc sulfide (ZnS) is particularly advantageous because it allows IR light to penetrate more deeply into an article than the common mineral filler, $TiO_2$. ZnS was shown to reflect less light than $TiO_2$ due to its lower refractive index. Less reflection, while disadvantageous for opacity, allows for improved reheat performance. Accordingly, in an application that requires IR reheating such as two-stage injection stretch blow molding, preforms (i.e., pre-oriented structures) comprising ZnS-containing compositions disclosed herein can be reheated more readily because IR light is not reflected before orientation and the ZnS allows the IR light to penetrate more deeply into the pre-oriented structure.

Aluminum flake is also an advantageous additional component because it provides both light reflection and also a small amount of IR absorption. In contrast, carbon black is generally disadvantageous because it absorbs both visible and IR light without reflecting, which can lead to over-absorbance at the surface, little IR penetration, and a large temperature difference between the surface and the interior of the reheated material. In some embodiments, the composition does not include carbon black.

**Whiteness / Opacity**

The whiteness of an article (or layer thereof) can be assessed by measuring the a* and b* values of the CIELAB color scale using a CIELAB color measurement instrument and known formulas. In some embodiments, an advantageously white article layer of the present disclosure has an a* and/or b* value of 0, or within the range of $\pm 2$, $\pm 4$, $\pm 6$, $\pm 8$, or $\pm 10$. The a* and b* values may be the same or different in any single article layer. As used herein, "$\pm$" in relation to a recited value refers to the full range between the negative and positive values. For example, an a* value of $\pm 10$ means an a* value in the range of -10 to +10.

Whiteness and/or opacity of an oriented polyester (e.g., PET) article may be achieved by incorporating a mineral filler into a polyester, such as through a masterbatch. Non-limiting examples of suitable such mineral fillers include anatase $TiO_2$, rutile $TiO_2$, zinc sulfide (ZnS), barium sulfate, calcium carbonate ($CaCO_3$), mica, $TiO_2$-coated mica (pearlescent particles), borosilicate glass, ceramic beads, talc, zinc oxide, and combinations thereof. The mineral filler or mineral filler-containing masterbatch may be melt mixed in an extruder with incompatible polymer and matrix polymer to form a composition that is later formed into an article.

In some embodiments, the disclosed composition includes $TiO_2$, which can provide both an efficient barrier to light and a highly white appearance. $TiO_2$ is also readily commercially available and reasonably inexpensive compared to other mineral fillers. The combination of light blocking, whiteness, and low cost make $TiO_2$ highly useful for achieving a desired effect in a broad array of finished articles. However, as noted above, there are significant disadvantages associated with relatively high loading of $TiO_2$ such that its content should be minimized if present at all.

To reduce the concentration of mineral fillers but further improve light blocking, absorbing pigments and/or dyes may be included in the composition. However, adding absorbing colorants can reduce the whiteness of an article. While full reflection creates a white appearance, traditional reflecting colorants may be included at relatively high loading levels to achieve higher opacity. Absorbing colorants such as carbon black can be used in combination with reflecting pigments to increase light blocking, thereby preventing further degradation of a product contained inside the article. However, colorants such as carbon black that absorb light may also absorb too much IR light, which can be problematic if an article is to be heated prior to orientation, as in the case of injection stretch blow molded PET bottles.

Opacity may be assessed as a measure of light transmission, which is the average amount of light that passes through an article within the visible range (400nm to 700nm). In some embodiments, an opaque article (or layer thereof) of the present disclosure has an average light transmission of about 20% or less, about 15% or less, about 10% or less, about 5% or less, about 4% or less, about 3% or less, about 2.5% or less, about 2% or less, about 1.5% or less, about 1% or less, or about 0.5% or less.

Although incompatible polymers create opacity, opacity generation may not be preferred for some recyclable materials. Accordingly, in some embodiments, opacity may be reduced by adding polyethylene or another polymer with a Vicat Softening Point that is lower than the orientation temperature of the polyester polymer in the composition. This is counterintuitive since adding polymers generally increases light scattering. Yet, without being bound by a particular theory, it is believed that the Vicat Softening Point of an incompatible polymer can be reduced by blending with a miscible incompatible polymer having a lower Vicat Softening Point, which lowers the overall Vicat Softening Point of the blend of incompatible polymers. Lowering the Vicat Softening Point to a temperature below the orientation temperature of the composition (containing a matrix polymer and incompatible polymer blend) can result in an article having significantly less opacity. Conversely, it is believed that the Vicat Softening Point of an incompatible polymer can be increased by blending with a miscible incompatible polymer having a higher Vicat Softening Point, which raises the overall Vicat Softening Point of the blend of incompatible polymers. Raising the Vicat Softening Point to a temperature above the orientation temperature of the composition (containing a matrix polymer and incompatible polymer blend) can result in an article that is significantly more opaque.

**Non-Pearlescence**

As used herein, the term "non-pearlescent" refers to a phenomenon where the color of a material does not substantially change as the angle of illumination or viewing is changed. To assess whether an article (or layer thereof) is non-pearlescent, CIELAB $DE_{CMC}$ values may be calculated using a multi-angle spectrophotometer (e.g., MA-T12 from X-Rite) between near-specular and farspecular viewing angles in order to quantify the magnitude of the change in appearance of the article. Using a 45° incident light source and measuring color at near-specular (15°) and at far specular (110°) angles, the color difference indicates the change in appearance across the two viewing angles. *See* Figure 2. A large difference in $DE_{CMC}$ values indicates a pearlescent or metallic appearance. An insubstantial difference in $DE_{CMC}$ values indicates a non-pearlescent appearance. For purposes of the present disclosure, a color change observed between a 15° viewing angle and a 110° viewing angle from a 45° illuminant is considered insubstantial and thus indicative of non-pearlescence if the color change difference is less than 15 units, less than 10 units, less than 8 units, or less than 6 units $DE_{CMC}$, wherein $DE_{CMC}$ is measured both parallel and perpendicular to the direction(s) of orientation. For a bottle, there are two directions of orientation - circumferential and axial. The highest measured $DE_{CMC}$ value is selected as the measure of gonioappearance. The concept is that highly pearlescent and metallic materials reflect most of the light at angles close to specular and reflect very little light at angles far from specular.

The appearance of disclosed articles formed using incompatible polymers may have a uniform, non-pearlescent appearance even when the orientation is not uniform. It is believed that this occurs because the unoriented preform and the oriented article are both non-pearlescent.

## EXAMPLES

The disclosed technology is next described by means of the following examples. The use of these and other examples anywhere in the specification is illustrative only, and in no way limits the scope and meaning of the disclosure or of any exemplified form. Likewise, the disclosure is not limited to any particular preferred embodiments described herein. Indeed, modifications and variations of the disclosure may be apparent to those skilled in the art upon reading this specification, and can be made without departing from its spirit and scope. The disclosure is therefore to be limited only by the terms of the claims, along with the full scope of equivalents to which the claims are entitled. All bottles described in the following examples are considered representative articles, and comparable results are expected for other types of articles - e.g., other containers, sheets, films, thermoformed parts, fibers, etc.

For purposes of the present disclosure and the following examples, various parameters (e.g., gonioappearance, visual pearlescence, opacity/light transmission, whiteness / color values, density, Vicat Softening Point, gloss) are measured as described below.

**Gonioappearance:** To measure gonioappearance, a method was developed to quantify the degree to which the color of a material changes over a range of viewing angles. An insubstantial color change, as defined above, is indicative of a non-pearlescent gonioappearance. A multi-angle spectrophotometer, an MA-96 from X-Rite, was used to measure spectral reflectance of a sample placed on top of a black Leneta card. The MA-96 uses a 45° illuminant and measures reflectance at six different angles -15°, 15°, 25°, 45°, 70°, and 110°, with 0° being the direct specular reflection of the 45° illuminant. Using a D65 illuminant and 10° standard observer, CIELAB L*, a*, and b* values were calculated for each measured reflectance angle. Since the MA-96 uses a directional illuminant, six measurements with the illuminant aligned in the direction of circumferential orientation were taken and averaged together. Then six measurements with the illuminant aligned in the direction of axial orientation were taken and averaged together. The difference in color (as calculated by $DE_{CMC}$) between reflectance at 15° and 110° was used as a measure of gonioappearance in each direction. The higher of the two averaged $DE_{CMC}$ values was used as the indication of gonioappearance.

**Visual Pearlescence:** Visual assessments of pearlescence were conducted and recorded in most instances as No or Yes. "No" means the sample did not look visually pearlescent. *See, e.g.,*

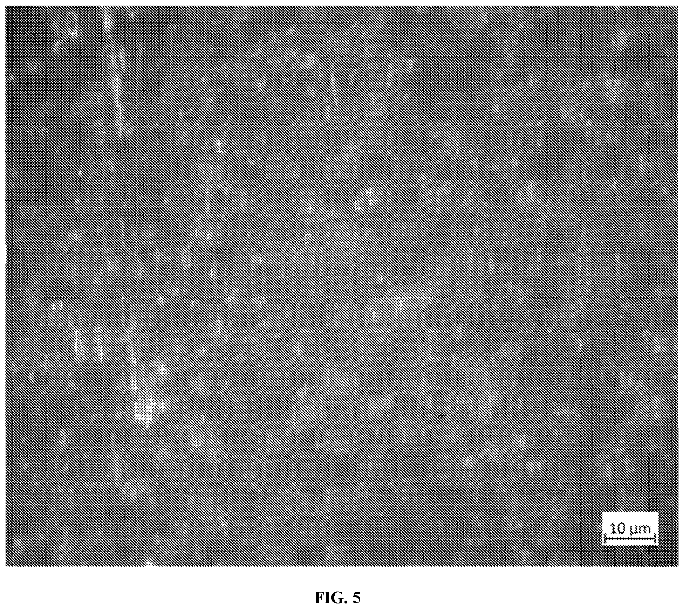

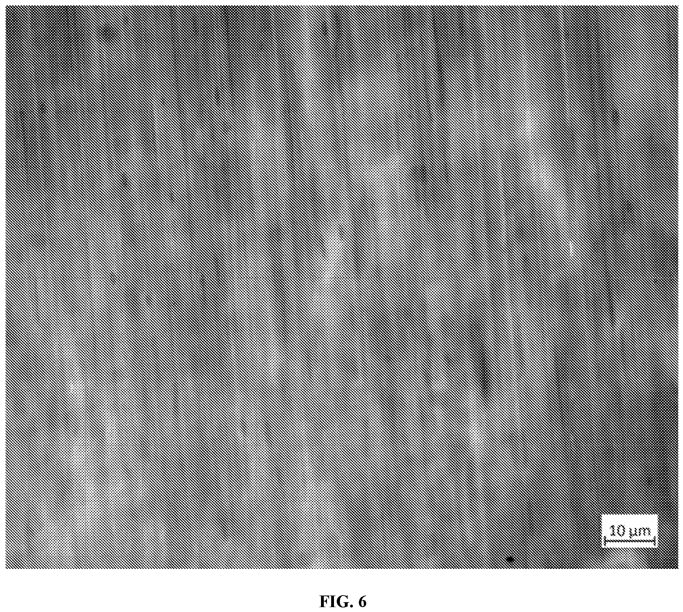

Figure 5. "Yes" means the sample looked visually pearlescent. *See, e.g.,* Figure 6. A visual assessment can confirm a quantified measurement of gonioappearance. In some instances, the presence or absence of a pearlescent appearance was not definitive, in which case the visual assessment was recorded as Not Determinable (ND).

**Opacity/Light Transmission (LT):** Light transmission was measured using an X-Rite Ci7800 spectrophotometer. The average light transmission from 400nm to 700nm was calculated as a percentage of light transmission. Each light transmission value presented in the examples below represents the average of six measurements.

**Whiteness / L*, a*, b*:** Color values were measured using an X-Rite Ci7800 spectrophotometer in reflectance. L*, a*, and b* values were calculated, assuming a D65 illuminant and a 10° standard observer. Each L*, a*, and b* color value presented in the examples below represents the average of six measurements.

**Density:** Density was measured using a displacement method, according to ASTM D792. Density is an indication of the amount of voiding that occurs. PET has a specific gravity of about 1.36 $g/cm^3$. Adding 4 wt% of an olefin will reduce the specific gravity of the composite blend by a small amount. For example, adding 4.0 wt% of a COC with a specific gravity of 1.02 $g/cm^3$ to PET lowers the composite specific gravity to 1.34 $g/cm^3$. A measured density lower than the calculated composite density indicates that voiding is occurring.

**Vicat Softening Point (VSP):** Vicat Softening Point was measured as the temperature at which a specimen is penetrated to a depth of 1 mm by a flat-ended needle with a 1 $mm^2$ circular or square cross-section. For purposes of the present disclosure, Vicat Softening Point is determined according to the method of ASTM D1525 (1 kg, 50°C/hr).

**Gloss:** Gloss was measured with a BYK micro-tri-gloss meter at 20°, 60°, and 85° incident angles according to the method of ASTM D523.

Materials used in the following examples are identified in Table 1.

**Table 1: Materials**

| Material | Grade | Manufacturer | VSP |
|---|---|---|---|
| COC | TOPAS® 6013F-04 | Polyplastics | 137°C |
| COC | TOPAS® 5013F-04 | Polyplastics | 137°C |
| COC | ZEONOR® 1020R | Zeonex | 110°C |
| COC | ZEONOR® 1060R | Zeonex | - |
| COC | TOPAS® 8007F-04 | Polyplastics | 78°C |
| Polypropylene | BAPOLENE® 4802 | Bamberger Polymer | 95°C |
| PMP | TPX™ RT-31 | Mitsui | 167°C |
| Low density polyethylene (LDPE) | BAPOLENE® LDPE 1072 | Bamberger Polymer | 90°C |
| PET | PQB7 | Polyquest | - |
| Hydrogenated styrene butadiene (HSB) | VIVION™ 1325 | Mitsui | 126°C |
| $TiO_2$ | CR-834 | Tronox | N/A |
| ZnS | SACHTOLITH® HDS | Venator Materials PLC | N/A |
| IR reflective rutile $TiO_2$ | ALTIRIS® 800 | Huntsman Corporation | N/A |
| 25 wt% loaded carbon black masterbatch in PET | PET-125 | Modern Dispersions, Inc | N/A |
| PET | PQB4 | Polyquest | N/A |
| Anatase $TiO_2$ | TIPAQUE® A-100 | Ishihara Corporation | N/A |

## Example 1

Samples 1-9 were prepared in which a minor amount of incompatible polymer was added to a major amount of dried PET (PQB7 manufactured by Polyquest). In one sample (Sample 8), no incompatible polymer was included, and $TiO_2$ was included instead as a control. Without an incompatible polymer, the $TiO_2$-containing composition of Sample 8 will be non-pearlescent. Each mixture of incompatible polymer pellets (or $TiO_2$ in Sample 8) and PET pellets was fed into an extruder of a Nissei ASB-50 single stage blow molding machine, running at 280°C to produce 29.7 g preforms, which were injection molded and stretched into bottles. The total orientation of each preform was estimated to be 3.38x axial and 2.63x circumferential for a total area draw ratio of $8.9x^2$. Orientation temperature was estimated to be in the range of 95°C to 110°C. Gonioappearance and visual pearlescence of the oriented bottles was assessed, and the results are shown in Table 2.

**Table 2**

| Sample | Minor phase | Grade | L* | a* | b* | %LT | Density (g/cm$^3$) | Circumferential DE$_{CMC}$ | Axial DE$_{CMC}$ | Pearlescent |
|---|---|---|---|---|---|---|---|---|---|---|
| 1 | 4 wt% COC | TOPAS® 6013F-04 | 95.65 | -0.04 | -0.39 | 12.08 | 1.30 | 9.3 | 5.3 | No |
| 2 | 4 wt% COC | ZEONOR® 1020R | 92.85 | -0.15 | 0.71 | 49.84 | 1.33 | 13.1 | 11.7 | Yes |
| 3 | 4 wt% COC | ZEONOR® 1060R | 92.44 | -0.18 | 0.90 | 58.63 | 1.34 | 15.1 | 14.9 | Yes |
| 4 | 4 wt% COC | TOPAS® 8007F-04 | 92.62 | -0.05 | 0.71 | 45.47 | 1.33 | 38.1 | 30.2 | Yes |
| 5 | 4 wt% polypropylene | BAPOLENE® 4802 | 94.45 | -0.03 | 0.48 | 31.50 | 1.33 | 21.7 | 12.7 | Yes |
| 6 | 4 wt% PMP | TPX™ RT-31 | 96.38 | 0.03 | -0.10 | 7.61 | 1.25 | 24.0 | 16.0 | Yes |
| 7 | 4 wt% LDPE | BAPOLENE® LDPE 1072 | 92.21 | 0.08 | 1.53 | 55.91 | 1.34 | 36.0 | 31.8 | Yes |
| 8 | None* | CR-834 (Tronox) | 97.26 | -0.57 | 0.91 | 4.12 | 1.33 | 5.2 | 2.8 | No |
| 9 | 1.0 wt% HSB | VIVION™ 1325 | 94.82 | - | - | 29.1 | 1.33 | 9.1 | - | No |
| *4 wt% TiO$_2$ added via a 50 wt% masterbatch (MB) | | | | | | | | | | |

Samples 1 and 9 showed surprisingly advantageous results, including a non-pearlescent visual appearance, and a non-pearlescent gonioappearance of 9.3 $DE_{CMC}$ units (Sample 1) and 9.1 $DE_{CMC}$ units (Sample 9). Each of Samples 1 and 9 included an incompatible polymer having a Vicat Softening Point (VSP) higher than the estimated 95°C to 110°C orientation temperature - i.e., in Sample 1, the selected COC had a VSP of 137°C; and in Sample 9, the selected HSB had a VSP of 126°C.

**Example 2**

Samples 10-17 were prepared using the same materials and processing conditions as Samples 1-8 of Example 1, except that the total orientation of each preform of Samples 10-17 was estimated to be 3.3x axial and 3.3x circumferential for a total area draw ratio of $10.9x^2$. Gonioappearance and visual pearlescence of the oriented bottles was assessed, and the results are shown in Table 3.

**Table 3**

| Sample | Minor phase | Grade | L* | a* | b* | % LT | Density (g/cm³) | Circumferential DE$_{CMC}$ | Axial DE$_{CMC}$ | Pearlescent |
|---|---|---|---|---|---|---|---|---|---|---|
| 10 | 4 wt% COC | TOPAS® 6013F-04 | 97.37 | -0.07 | -0.17 | 5.05 | 1.26 | 12.8 | 7.0 | No |
| 11 | 4 wt% COC | ZEONOR® 1020R | 95.50 | 0.00 | 0.17 | 19.97 | 1.32 | 16.4 | 9.1 | Yes |
| 12 | 4 wt% COC | ZEONOR® 1060R | 94.92 | -0.06 | 0.56 | 32.31 | 1.33 | 15.9 | 12.5 | Yes |
| 13 | 4 wt% COC | TOPAS® 8007F-04 | 93.00 | -0.03 | 1.08 | 47.52 | 1.33 | 35.9 | 32.4 | Yes |
| 14 | 4 wt% polypropylene | BAPOLENE® 4802 | 94.84 | -0.02 | 0.62 | 27.2 | 1.33 | 23.9 | 15.8 | Yes |
| 15 | 4 wt% PMP | TPX™ RT-31 | 96.41 | 0.04 | -0.03 | 6.48 | 1.23 | 23.9 | 14.0 | Yes |
| 16 | 4 wt% LDPE | BAPOLENE® LDPE 1072 | 92.48 | 0.04 | 1.82 | 54.48 | 1.34 | 33.6 | 32.5 | Yes |
| 17 | None* | CR-834 (Tronox) | 97.03 | -0.49 | 0.82 | 3.07 | 1.30 | 3.7 | 3.3 | No |

*4 wt% TiO$_2$ added via a 50 wt% masterbatch (MB)

15

Sample 10 showed surprisingly advantageous results, including a non-pearlescent visual appearance, and a non-pearlescent gonioappearance of 12.8 $DE_{CMC}$ units. Sample 10 included an incompatible polymer having a VSP higher than the estimated 95°C to 110°C orientation temperature - i.e., the selected COC had a VSP of 137°C.

**Example 3**

Samples 18-21 were prepared in which a minor amount of incompatible polymer pellets (PMP, grade TPX™ RT-31, or a combination of PMP, grade TPX™ RT-31 and COC, grade TOPAS® 5013F-04) was hand mixed with a major amount of PET pellets (PQB7 manufactured by Polyquest). No $TiO_2$ was included in any of these samples. The mixture of pellets was fed into an extruder of a Nissei ASB-50 single stage blow molding machine under the following processing conditions: PET dryer temperature (300°F); PET dryer dew point (-42°F); bag shake; recovery (175 RPM); back pressure (0-2 MPa); extruder barrel temperature (280°C); injection time (9 sec); injection speed (40-80%); injection pressure (4-10.5 MPa); hot runner temperature (280°C); holding pressure (7 MPa); cooling time (5.5 sec); preform cool temperature (64°F); conditioning pot temperature (180°C); and conditioning time (12 sec). Each of the resulting bottles had an estimated axial orientation of 3.3x and an estimated circumferential orientation of 3.3x for a total area draw ratio of $10.9x^2$.
The samples were assessed for whiteness / color values, light transmission, density, gonioappearance, and visual pearlescence, and the results are shown in Table 4.

**Table 4**

| | Sample 18 | Sample 19 | Sample 20 | Sample 21 |
|---|---|---|---|---|
| PMP (wt%) | 2.0 | 2.0 | 2.0 | 2.0 |
| COC (wt%) | 5.0 | 0.0 | 5.0 | 5.0 |
| PET (wt%) | 93.0 | 98.0 | 93.0 | 93.0 |
| L* | 97.38 | 97.37 | 97.36 | 97.54 |
| a* | -0.12 | -0.17 | -0.06 | -0.06 |
| b* | -0.40 | 0.18 | -0.33 | -0.38 |
| Light Transmission (%) | 3.52 | 13.30 | 3.38 | 2.74 |
| Density (g/cm$^3$) | 1.18 | 1.29 | 1.17 | 1.11 |
| Circumferential $DE_{CMC}$ | 11.5 | 25.1 | 13.8 | 13.1 |
| Axial $DE_{CMC}$ | 9.5 | 7.5 | 6.9 | 7.7 |
| Pearlescent | No | Yes | No | No |
| Preform Weight (g) | 57.4 | 58.3 | 58.1 | 57.8 |

Samples 18, 20, and 21 showed surprisingly advantageous results, including: a non-pearlescent visual appearance; a non-pearlescent gonioappearance of 11.5 $DE_{CMC}$ units (Sample 18), 13.8 $DE_{CMC}$ units (Sample 20), and 13.1 $DE_{CMC}$ units (Sample 21); and a low light transmission of 3.52% (Sample 18), 3.38% (Sample 20), and 2.74% (Sample 21). Sample 19 contained PMP as the only incompatible polymer and resulted in an article having a non-pearlescent visual appearance.

**Example 4**

Samples 22-29 were prepared in which increased loadings of fully hydrogenated styrene butadiene (HSB) copolymer (VIVION™ 1325 from Mitsui) were melt blended with a balance of bottle grade PET (0.80 dl/g IV, grade PQB7 from Polyquest). Each mixture was extruded at 280°C, and molded into a preform on an ASB MB50 single stage blow molder. The resulting bottles had an estimated axial orientation of 3.3x and an estimated circumferential orientation of 3.3x for a total area draw ratio of $10.9x^2$. Opacity was measured on an X-Rite Ci7800 spectrophotometer with % light transmission being defined as the average light transmission from 400nm to 700nm. The samples were assessed for light transmission and density, and the results are shown in Table 5. The data show that the HSB copolymer continues to decrease light transmission (i.e., increase opacity) even at higher loadings, and that the benefits of increased opacity do not appear to plateau.

**Table 5**

| Sample | 22 | 23 | 24 | 25 | 26 | 27 | 28 | 29 |
|---|---|---|---|---|---|---|---|---|
| HSB (wt%) | 1.00 | 3.00 | 4.00 | 5.00 | 6.00 | 8.00 | 10.00 | 12.00 |
| % Light Transmission | 29.12 | 9.75 | 6.02 | 5.29 | 3.36 | 2.75 | 2.65 | 2.16 |
| Density (g/cm$^3$) | -- | -- | 1.27 | -- | -- | 1.15 | 1.13 | 1.08 |

Comparative Samples 1-6 were prepared using increased loadings of PMP (grade TPX™ RT-31 from Mitsui), which was melt blended with a balance of bottle grade PET (0.80 dl/g IV, grade PQB7 from Polyquest). Each mixture was extruded at 280°C, and molded into a preform on an ASB MB50 single stage blow molder. The resulting bottles had an estimated axial orientation of 3.3x and an estimated circumferential orientation of 3.3x for a total area draw ratio of 10.9x$^2$. Opacity was measured on an X-Rite Ci7800 spectrophotometer with % light transmission being defined as the average light transmission from 400nm to 700nm. The samples were assessed for light transmission and density, and the results are shown in Table 6. The data show that, unlike HSB (see Table 5 above), increased loadings of PMP achieved only limited reduction of light transmission, plateauing at about 4.5% light transmission. Thus, even at comparable loadings, compositions PMP as the only incompatible polymer do not achieve the same advantageous degree of opacity as compositions containing HSB.

**Table 6**

| Sample | Comp 1 | Comp 2 | Comp 3 | Comp 4 | Comp 5 | Comp 6 |
|---|---|---|---|---|---|---|
| PMP (wt%) | 1.00 | 3.00 | 4.00 | 5.00 | 6.00 | 8.00 |
| % Light Transmission | 15.82 | 5.28 | 5.57 | 4.46 | 4.05 | 4.29 |
| Density (g/cm$^3$) | 1.34 | 1.24 | 1.18 | 1.20 | 1.15 | 1.15 |

## Example 5

Bottles were prepared from a mixture of masterbatch pellets, incompatible polymer pellets, and pre-dried PET (grade PQB7) pellets. The MB pellets were prepared by mixing an additive or colorant with PET (grade PQB4), and then extruding the mixture on a twin screw extruder at 260°C, stranding, and chopping into pellets. The compositions of these masterbatch pellets are shown in Table 7. The incompatible polymers used in this example were PMP (TPX™ RT-31), HSB (VINION™ 1325), and COC (TOPAS® 5013F-04).

**Table 7**

| Masterbatch (MB) | Content |
|---|---|
| TiO$_2$ (CR-834) MB | 65 wt% TiO$_2$; 35 wt% PET |
| ZnS (SACHTOLITH® HDS) MB | 60 wt% ZnS; 40 wt% PET |
| IR reflective rutile TiO$_2$ (ALTIRIS® 800) MB | 65 wt% TiO$_2$; 35 wt% PET |
| 25 wt% loaded carbon black in PET (PET-125) MB | 20 wt% loaded carbon black in PET-125; 80 wt% PET (total content: 5 wt% carbon black; 95 wt% PET) |
| Black Dye MB | 0.429 wt% PARASOL GREEN 5B (SG 3)<br>0.096 wt% KEYPLAST RED CB (SR 195)<br>0.285 wt% MACROLEX® ORANGE 3G (SO 60)<br>99.19 wt% PET |
| Aluminum pigment MB | 1.0 wt% STAPA® WM CHROMAL V/S/80; 99.0 wt% PET |
| Yellow Dye (SY-93) MB | 10 wt% MACROLEX® YELLOW 3G (SY 93); 99 wt% PET |

Samples 30-37 and Comparative Samples 7-9 are preform compositions that were prepared by mixing masterbatch pellets, incompatible polymer pellets, and PET pellets in a bag, and then feeding the mixture into the feed throat of a Nissei ASB-50M single stage blow molder. The content of the preforms of Samples 30-37 and Comparative Samples 7-9 is shown in Table 8.

**Table 8**

| Sample | 30 | 31 | 32 | 33 | 34 | 35 | 36 | 37 | Comp 7 | Comp 8 | Comp 9 |
|---|---|---|---|---|---|---|---|---|---|---|---|
| PMP (wt%) | - | - | - | - | - | - | - | 1.00 | 2.00 | 5.00 | 8.93 |
| HSB (wt%) | - | - | - | - | - | - | 3.00 | - | - | - | - |
| COC (wt%) | 5.00 | 5.00 | 3.00 | 9.00 | 3.00 | 3.00 | - | 4.50 | - | - | - |
| TiO$_2$ MB (wt%) | - | - | - | - | - | - | 0.77 | 0.15 | - | - | 2.89 |
| IR reflective rutile TiO$_2$ MB (wt%) | - | 1.54 | - | - | - | - | - | - | - | 1.54 | - |
| ZnS MB (wt%) | - | - | 0.50 | 1.67 | 0.50 | 0.50 | - | - | - | - | - |
| 25 wt% loaded carbon black in PET MB (wt%) | - | - | - | - | - | - | - | - | - | - | 2.00 |
| PET (wt%) | 95.00 | 93.46 | 96.50 | 89.33 | 96.50 | 96.50 | 96.23 | 94.35 | 98.00 | 93.46 | 86.18 |

The preforms of Samples 30-37 and Comparative Samples 7-9 were stretch oriented to form two types of bottles (Bottle Form A and Bottle Form B) under the following processing conditions: PET dryer temperature (300°F); PET dryer dew point (-42°F); bag shake; recovery (175 RPM); extruder barrel temperature (280°C); injection time (9 sec); hot runner temperature (280°C); cooling time (5.5 sec); preform cool temperature (64°F); conditioning pot temperature (180°C); and conditioning time (12 sec). Back pressure, holding pressure, and injection speed were varied as shown in Table 9.

**Table 9**

| Sample | 30 | 31 | 32 | 33 | 34 | 35 | 36 | 37 | Comp 7 | Comp 8 | Comp 9 |
|---|---|---|---|---|---|---|---|---|---|---|---|
| Back Pressure (MPa) | 2 | 2 | 2 | 2 | 2 | 0 | 2 | 2 | 0 | 2 | 2 |
| Holding Pressure (MPa) | 4 | 4 | 4 | 4 | 4 | 7 | 4 | 4 | 7 | 4 | 4 |
| Injection Speed (%) | 70 | 70 | 70 | 75 | 80 | 40 | 75 | 75 | 50 | 70 | 75 |

The compositions of the final bottles (identified as Samples 30'-37' and Comparative Samples 7'-9') is shown in Table 10. For clarity, it is noted that Sample 30, for example, is a preform composition, whereas Sample 30' is an article formed from the preform composition of Sample 30. This terminology similarly applies to other like identified samples disclosed herein.

**Table 10**

| Sample | 30' | 31' | 32' | 33' | 34' | 35' | 36' | 37' | Comp 7' | Comp 8' | Comp 9' |
|---|---|---|---|---|---|---|---|---|---|---|---|
| PMP (wt%) | - | - | - | - | - | - | - | 1.00 | 2.00 | 5.00 | 8.93 |
| HSB (wt%) | - | - | - | - | - | - | 3.00 | - | - | - | - |
| COC (wt%) | 5.00 | 5.00 | 3.00 | 9.00 | 3.00 | 3.00 | - | 4.50 | - | - | - |
| TiO$_2$ MB (wt%) | - | - | - | - | - | - | 0.50 | 0.10 | - | - | 2.89 |
| IR reflective rutile TiO$_2$ MB (wt%) | - | 1.00 | - | - | - | - | - | - | - | 1.00 | - |
| ZnS MB (wt%) | - | - | 0.30 | 1.00 | 0.30 | 0.30 | - | - | - | - | - |
| 25 wt% loaded carbon black in PET MB (wt%) | - | - | - | - | - | - | - | - | - | - | 0.10 |
| PET (wt%) | 95.00 | 94.00 | 96.70 | 90.00 | 96.70 | 96.70 | 96.50 | 94.40 | 98.00 | 94.00 | 88.08 |

Bottle Form A had an orientation estimated to be 3.38x axial and 2.63x circumferential for a total area draw ratio of $8.9x^2$. The Bottle A samples were assessed for whiteness / color values, light transmission, density, gonioappearance, visual pearlescence, and gloss, and the results are shown in Table 11.

Table 11

| Sample | 30' | 31' | 32' | 33' | 34' | 35' | 36' | 37' | Comp 7' | Comp 8' | Comp 9' |
|---|---|---|---|---|---|---|---|---|---|---|---|
| L* | 95.2 | 95.5 | 94.1 | 96.9 | 94.4 | 94.3 | 95.3 | 96.0 | 94.8 | 96.4 | 54.8 |
| a* | -0.3 | -0.5 | -0.6 | -0.4 | -0.5 | -0.7 | -0.3 | -0.1 | -0.2 | -0.2 | -0.1 |
| b* | -0.2 | 1.3 | 0.4 | 0.4 | 0.3 | 0.3 | 0.6 | -02 | 0.1 | 0.8 | -2.9 |
| %LT | 15.2 | 6.2 | 25.2 | 2.0 | 23.6 | 16.3 | 13.8 | 7.7 | 17.5 | 3.8 | 0.0 |
| Density (g/cm³) | 1.31 | - | - | 1.17 | 1.33 | 1.33 | - | 1.26 | 1.31 | - | 1.08 |
| Circumferential $DE_{CMC}$ | 9.0 | 9.4 | 9.9 | 10.2 | 8.8 | 6.0 | 7.9 | 11.6 | 17.5 | 13.9 | 17.1 |
| Axial $DE_{CMC}$ | 3.0 | 4.6 | 3.7 | 3.7 | 3.0 | - | 2.7 | 6.5 | 7.2 | 6.1 | 5.6 |
| Pearle scent | No | No | No | No | No | No | No | No | Yes | Yes | Yes |
| 20° Gloss | 33 | 8 | 24 | 7 | 14 | 3 | 40 | 13 | 50 | 30 | 11 |
| 60° Gloss | 79 | 42 | 73 | 35 | 54 | 16 | 85 | 57 | 92 | 72 | 52 |
| 85° Gloss | 90 | 79 | 95 | 82 | 81 | 39 | 90 | 79 | 95 | 91 | 89 |

Bottle Form B had an orientation estimated to be 3.3x axial and 3.3x circumferential for a total area draw ratio of $10.9x^2$. The Bottle B samples were assessed for whiteness / color values, light transmission, density, gonioappearance, visual pearlescence, and gloss, and the results are shown in Table 12.

Table 12

| Sample | 30' | 31' | 32' | 33' | 34' | 35' | 36' | 37' | Comp 7' | Comp 8' | Comp 9' |
|---|---|---|---|---|---|---|---|---|---|---|---|
| L* | 96.7 | 96.7 | 95.4 | 97.8 | 95.3 | 95.0 | 96.5 | 96.9 | 95.4 | 96.4 | 55.8 |
| a* | -0.1 | -0.3 | -0.4 | -0.2 | -0.4 | -0.5 | -0.1 | -0.2 | -0.2 | -0.2 | 0.0 |
| b* | -0.4 | 0.9 | 0.0 | 0.3 | 0.2 | 0.3 | 0.6 | 0.0 | 0.2 | 0.8 | -2.5 |
| %LT | 6.9 | 3.7 | 14.2 | 1.7 | 18.5 | 18.3 | 12.0 | 4.4 | 13.3 | 4.5 | 0.0 |
| Density (g/cm³) | 1.26 | 1.23 | 1.31 | 1.08 | 1.31 | 1.32 | - | 1.22 | 1.29 | 1.17 | 1.01 |
| Circumferential $DE_{CMC}$ | 9.5 | 8.7 | 7.2 | 9.4 | 7.1 | 7.7 | 6.5 | 11.0 | 25.1 | 17.7 | 17.4 |
| Axial $DE_{CMC}$ | 3.6 | 4.8 | 4.4 | 4.7 | 6.5 | 7.2 | 2.8 | 6.4 | 7.5 | 7.3 | 7.8 |
| Pearle scent | No | No | No | No | No | No | No | No | Yes | Yes | Yes |
| 20° Gloss | 48 | 18 | 41 | 15 | 42 | 3 | 63 | 29 | 36 | 39 | 14 |
| 60° Gloss | 89 | 62 | 84 | 56 | 92 | 19 | 91 | 79 | 85 | 82 | 57 |
| 85° Gloss | 96 | 89 | 94 | 83 | 99 | 68 | 91 | 92 | 94 | 92 | 90 |

Samples 30'-33' showed surprisingly advantageous results, including demonstrating that using a COC-based incompatible polymer can yield articles that are white, opaque and non-pearlescent with or without the presence of colorants such as $TiO_2$ or ZnS.
Samples 34' and 35' showed that changing select process conditions can result in very different gloss values but still yield a bottle with a white, opaque, and non-pearlescent appearance.
Sample 36' showed surprisingly advantageous results, including demonstrating that using a hydrogenated styrenic block copolymer as the incompatible polymer can yield articles that are white, opaque' and non-pearlescent.
Sample 37' showed surprisingly advantageous results, including demonstrating that blending PMP with another incompatible polymer can result in articles that are non-pearlescent, even when the ratio of PMP to light scattering pigment is high, for example 10 to 1.

Comparative Samples 7'-9' showed that using PMP can result in an article having a pearlescent visual appearance, even in the presence of about 1-3 wt% of other colorants, and even when the a* and b* values are each within the range of ±3 units.

### Example 6

Bottles were prepared from a mixture of masterbatch pellets, incompatible polymer pellets, and pre-dried PET (grade PQB7) pellets, which are the same as those set forth in Example 5. *See* Table 7. Samples 38-41 and Comparative Samples 10-12 are compositions made by mixing masterbatch pellets, incompatible polymer pellets, and PET pellets in a bag, and feeding the mixture into a Nissei ASB-50M single stage blow molder to produce preforms. The content of the preform compositions of Samples 38-41 and Comparative Samples 10-12 is shown in Table 13.

**Table 13**

| Sample | 38 | 39 | 40 | 41 | Comp 10 | Comp 11 | Comp 12 |
|---|---|---|---|---|---|---|---|
| PMP (wt%) | - | - | - | - | - | - | 6.00 |
| HSB (wt%) | - | - | - | 6.00 | 6.00 | - | - |
| COC (wt%) | 6.00 | 4.00 | 4.00 | - | - | - | - |
| $TiO_2$ MB (wt%) | - | - | - | - | - | - | - |
| IR reflective rutile $TiO_2$ MB (wt%) | - | - | - | - | - | 13.33 | - |
| ZnS MB (wt%) | 3.33 | 5.83 | 5.83 | 1.67 | 1.67 | - | - |
| Black Dye MB (wt%) | 1.00 | - | 1.00 | - | - | - | 1.00 |
| Aluminum pigment MB (wt%) | - | 3.50 | - | 4.00 | 4.00 | - | - |
| Yellow Dye MB (wt%) | - | - | - | - | 1.00 | 1.00 | - |
| PET (wt%) | 91.67 | 86.67 | 89.17 | 88.33 | 87.33 | 85.67 | 93.00 |

The preform compositions of Samples 38-41 and Comparative Samples 10-12 were stretch oriented to form two types of bottles (Bottle Form A and Bottle Form B) under the following processing conditions: PET dryer temperature (300°F); PET dryer dew point (-42°F); bag shake; recovery (175 RPM); extruder barrel temperature (280°C); injection time (9 sec); hot runner temperature (280°C); cooling time (5.5 sec); preform cool temperature (64°F); conditioning pot temperature (180°C); conditioning time (12 sec); back pressure (2 MPa); holding pressure (4-7 MPa); and injection speed (65-70%). The compositions of the final bottles (identified as Samples 38'-41' and Comparative Samples 10'-12') is shown in Table 14.

**Table 14**

| Sample | 38' | 39' | 40' | 41' | Comp 10' | Comp 11' | Comp 12' |
|---|---|---|---|---|---|---|---|
| PMP (wt%) | - | - | - | - | - | - | 6.00 |
| HSB (wt%) | - | - | - | 6.00 | 6.00 | - | - |
| COC (wt%) | 6.00 | 4.00 | 4.00 | - | - | - | - |
| $TiO_2$ MB (wt%) | - | - | - | - | - | - | - |
| IR reflective rutile $TiO_2$ MB (wt%) | | - | - | - | - | 8.00 | - |
| ZnS MB (wt%) | 2.00 | 3.50 | 3.50 | 1.00 | 1.00 | - | - |
| Black Dye MB (wt%) | 0.008 | - | 0.008 | - | - | - | 0.008 |
| Aluminum pigment MB (wt%) | - | 0.035 | - | 0.04 | 0.04 | - | - |
| Yellow Dye MB (wt%) | - | - | - | - | 0.10 | 0.10 | - |
| PET (wt%) | 91.992 | 92.465 | 92.492 | 92.96 | 92.86 | 91.90 | 93.992 |

Bottle Form A had an orientation estimated to be 3.38x axial and 2.63x circumferential for a total area draw ratio of 8.9x$^2$. The Bottle A samples were assessed for whiteness / color values, light transmission, density, gonioappearance, visual pearlescence, and gloss, and the results are shown in Table 15.

**Table 15**

| Sample | 38' | 39' | 40' | 41' | Comp 10' | Comp 11' | Comp 12' |
|---|---|---|---|---|---|---|---|
| L* | 85.2 | 84.9 | 86.6 | 84.6 | 82.7 | 93.3 | 88.6 |
| a* | 0.3 | -0.9 | 0.0 | -0.6 | -10.3 | -7.6 | 0.6 |
| b* | -0.8 | -2.6 | -1.1 | -1.8 | 45.7 | 37.2 | 0.0 |
| % LT | 0.64 | 0.14 | 0.62 | 0.22 | 0.34 | 2.77 | 0.86 |
| Density (g/cm$^3$) | 1.28 | 1.3 | 1.31 | 1.24 | 1.24 | 1.42 | 1.12 |
| Circumferential DE$_{CMC}$ | 9.9 | 5.1 | 3.5 | 4.7 | 10.4 | 8.9 | 16.1 |
| Axial DE$_{CMC}$ | 3.4 | 9.9 | 8.4 | 9.9 | 19.0 | 4.7 | 20.3 |
| Pearlescent | ND | No | No | ND | Yes | No | Yes |
| 20° Gloss | 6 | 3 | 4 | 12 | 14 | 5 | 26 |
| 60° Gloss | 39 | 17 | 28 | 52 | 56 | 45 | 71 |
| 85° Gloss | 85 | 65 | 81 | 87 | 87 | 89 | 79 |

Bottle Form B had an orientation estimated to be 3.3x axial and 3.3x circumferential for a total area draw ratio of 10.9x$^2$. The Bottle B samples were assessed for whiteness / color values, light transmission, density, gonioappearance, visual pearlescence, and gloss, and the results are shown in Table 16.

**Table 16**

| Sample | 38' | 39' | 40' | 41' | Comp 10' | Comp 11' | Comp 12' |
|---|---|---|---|---|---|---|---|
| L* | 88.1 | 87.2 | 89.0 | 85.9 | 84.8 | 93.3 | 89.7 |
| a* | 0.3 | -0.7 | 0.1 | -0.4 | -10.4 | -7.4 | 0.6 |
| b* | -0.4 | -1.9 | -0.5 | -1.2 | 42.3 | 36.4 | 0.0 |
| % LT | 0.50 | 0.21 | 0.72 | 0.8 | 0.61 | 3.82 | 1.42 |
| Density (g/cm$^3$) | 1.23 | 1.28 | 1.28 | 1.21 | 1.23 | 1.42 | 1.07 |
| Circumferential DE$_{CMC}$ | 5.2 | 6.2 | 6.2 | 5.7 | 10.5 | 6.2 | 16.4 |
| Axial DE$_{CMC}$ | 4.3 | 8.6 | 6.7 | 9.8 | 18.5 | 6.2 | 25.1 |
| Pearlescent | No | No | No | ND | Yes | No | Yes |
| 20° Gloss | 9 | 5 | 7 | 23 | 23 | 9 | 31 |
| 60° Gloss | 50 | 32 | 43 | 70 | 72 | 48 | 83 |
| 85° Gloss | 89 | 82 | 88 | 93 | 91 | 90 | 93 |

Samples 38'-40' showed surprisingly advantageous results, including demonstrating that using a COC-based incompatible polymer can yield articles that are white, opaque, and non-pearlescent with light transmission values less than 1.0%, and even less than 0.5%, without TiO$_2$.

Sample 41' showed surprisingly advantageous results, including demonstrating that using a hydrogenated styrenic incompatible polymer can yield articles that are white, opaque and non-pearlescent. Comparative Sample 10' has the same composition as Sample 41' but with the addition 0.1 wt% of a yellow dye. As a result, the Comparative Sample 10' bottle had a pearlescent appearance and was not white, with CIELAB a* and b* color values outside the range of ± 10 units.

Comparative Sample 11' shows that pearlescence does not necessarily correspond to a non-white appearance. The Comparative Sample 11' bottle was opaque, had a yellow appearance due to the presence of the TiO$_2$ and dye,

and was non-pearlescent. Comparative Sample 12' also demonstrates a pearlescent appearance resulting from a composition that includes PMP and dye.

### Example 7

Bottles were prepared from a mixture of masterbatch pellets and pre-dried PET (grade PQB7) pellets. For Samples 42-43 and Comparative Samples 13-16, the masterbatch pellets contained incompatible polymer (COC, grade TOPAS® 5013F-04) and TiO$_2$. The content of these masterbatches is shown in Table 17.

**Table 17**

| Sample | Masterbatch | | | |
|---|---|---|---|---|
| | COC | TiO$_2$ | PMP (TPX™ RT-31) | Other Colorant |
| 42 | 78 wt% | 22 wt% ALTIRIS® 800 | None | None |
| 43 | 58 wt% | 22 wt% ALTIRIS® 800 | 20 wt% | None |
| Comp 13 | 78 wt% | 21 wt% ALTIRIS® 800 | None | 1.0 wt% Yellow dye (SY 93) |
| Comp 14 | 58 wt% | 21 wt% ALTIRIS® 800 | 20 wt% | 1.0 wt% Yellow dye (SY 93) |
| Comp 15 | 78 wt% | 21 wt% TIPAQUE® A-100 | None | 1.0 wt% Red dye (SR 195) |
| Comp 16 | 78 wt% | 21 wt% TIPAQUE® A-100 | None | 1.0 wt% Blue dye (SB 104) |

For each of Samples 42-43 and Comparative Samples 13-16, 5.1 wt% of the corresponding masterbatch pellets was added to 94.9 wt% dried PET (grade PQB7) pellets using a Plastrac volumetric dosing system and then fed into the feed throat of a Nissei ASB-50M single stage blow molder.

The compositions of Samples 42-43 and Comparative Samples 13-16 were stretch oriented to form two types of bottles (Bottle Form A and Bottle Form B) under the following processing conditions: PET dryer temperature (300°F); PET dryer dew point (-42°F); bag shake; recovery (175 RPM); extruder barrel temperature (280°C); injection time (9 sec); hot runner temperature (280°C); cooling time (5.5 sec); preform cool temperature (64°F); conditioning pot temperature (180°C); conditioning time (12 sec); back pressure (2 MPa); holding pressure (4 MPa); and injection speed (65-70%). The compositions of the final bottles of Samples 42-43 and Comparative Samples 13-16 is shown in Table 18.

**Table 18**

| Sample | 42 | 43 | Comp 13 | Comp 14 | Comp 15 | Comp 16 |
|---|---|---|---|---|---|---|
| PMP (wt%) | - | 1.020 | - | 1.020 | - | - |
| COC (wt%) | 3.978 | 2.958 | 3.978 | 2.958 | 3.978 | 3.798 |
| TiO$_2$ (ALTIRIS® 800) (wt%) | 1.122 | 1.122 | 1.071 | 1.071 | - | - |
| TiO$_2$ (TIPAQUE® A-100) (wt%) | - | - | - | - | 1.071 | 1.071 |
| Yellow dye (wt%) | - | - | 0.051 | 0.051 | - | - |
| Red dye (wt%) | - | - | - | - | 0.051 | - |
| Blue dye (wt%) | - | - | - | - | - | 0.051 |
| PET (wt%) | 94.900 | 94.900 | 94.900 | 94.900 | 94.900 | 94.900 |

Bottle Form A had an orientation estimated to be 3.38x axial and 2.63x circumferential for a total area draw ratio of 8.9x$^2$. The Bottle A samples were assessed for whiteness / color values, light transmission, density, gonioappearance, visual pearlescence, and gloss, and the results are shown in Table 19.

**Table 19**

| Sample | 42 | 43 | Comp 13 | Comp 14 | Comp 15 | Comp 16 |
|---|---|---|---|---|---|---|
| L* | 95.1 | 95.9 | 91.7 | 92.5 | 56.9 | -0.9 |
| a* | -0.8 | -0.6 | -8.0 | -8.2 | 53.6 | 65.8 |

(continued)

| Sample | 42 | 43 | Comp 13 | Comp 14 | Comp 15 | Comp 16 |
|---|---|---|---|---|---|---|
| b* | 1.2 | 0.9 | 51.8 | 47.0 | -12.3 | -9.6 |
| %LT | 11.1 | 7.47 | 6.32 | 4.8 | 5.3 | -32.0 |
| Density (g/cm$^3$) | 1.31 | 1.28 | 1.31 | 1.26 | 1.30 | 1.31 |
| Circumferential DE$_{CMC}$ | 9.6 | 10.3 | 18.5 | 17.6 | 18.3 | 11.9 |
| Axial DE$_{CMC}$ | 4.9 | 5.3 | 6.5 | 8.0 | 6.0 | 4.8 |
| Pearle scent | No | ND | Yes | Yes | Yes | Yes |
| 20° Gloss | 7 | 8 | 7 | 6 | 12 | 13 |
| 60° Gloss | 41 | 44 | 41 | 41 | 59 | 60 |
| 85° Gloss | 76 | 88 | 85 | 85 | 91 | 91 |

Bottle Form B had an orientation estimated to be 3.3x axial and 3.3x circumferential for a total area draw ratio of 11.0x$^2$. The Bottle B samples were assessed for whiteness / color values, light transmission, density, gonioappearance, visual pearlescence, and gloss, and the results are shown in Table 20.

**Table 20**

| Sample | 42 | 43 | Comp 13 | Comp 14 | Comp 15 | Comp 16 |
|---|---|---|---|---|---|---|
| L* | 96.1 | 96.4 | 93.0 | 93.6 | 60.9 | 70.9 |
| a* | -0.6 | -0.5 | -8.7 | -8.4 | 53.4 | -10.1 |
| b* | 0.9 | 0.6 | 47.2 | 41.6 | -12.8 | -29.0 |
| %LT | 7.34 | 6.83 | 4.52 | 4.25 | 2.9 | 0.4 |
| Density (g/cm$^3$) | 1.28 | 1.27 | 1.29 | 1.25 | 1.29 | 1.27 |
| Circumferential DE$_{CMC}$ | 7.9 | 10.0 | 14.4 | 16.8 | 11.6 | 9.0 |
| Axial DE$_{CMC}$ | 4.1 | 5.9 | 8.1 | 9.0 | 6.8 | 5.9 |
| Pearle scent | No | ND | Yes | Yes | ND | ND |
| 20° Gloss | 8 | 8 | 8 | 10 | 18 | 19 |
| 60° Gloss | 55 | 54 | 53 | 59 | 68 | 67 |
| 85° Gloss | 74 | 90 | 87 | 89 | 92 | 93 |

Sample 42 showed surprisingly advantageous results, including demonstrating that a masterbatch containing incompatible polymer and TiO$_2$ can yield an article that is white, opaque and non-pearlescent.

Sample 43 showed surprisingly advantageous results, including demonstrating that adding another incompatible polymer can improve properties, such as light transmission and gloss, while maintaining an article that is white, opaque, and non-pearlescent.

Comparative Samples 13-16 showed that adding a small amount of colorant, such that the CIELAB a* or b* values fall outside the range of ± 10 units, changes the appearance of the article to pearlescent. By contrast, Samples 39 and 40 combine zinc sulfide with an incompatible polymer and colorant, such that the CIELAB a* and b* values are both inside the range of ± 10 units, and the appearance of the article is non-pearlescent.

## Example 8

Samples 44-45 and Comparative Sample 17 are multi-layer stretch oriented bottles that were made on a Nissei ASB-50M outfitted with two extruders and designed to make a bottle with three layers: an exterior skin (A Layer), a core (B Layer), and an interior skin (A Layer). Bottles were made with a three-layer A-B-A structure in which the A-layer composition was identical in both the exterior skin and the interior skin. The A-layer included incompatible polymer (COC, grade TOPAS® 5013F-04), inorganic filler (ZnS, SACHTOLITH® HDS), an optional colorant, and pre-dried PET. The B-layer was a different composition, used only in the core. The B-layer was fully encapsulated by the exterior and interior A-layer skins. The B-layer core composition included 5 wt% of a dye-based black colorant masterbatch, comprising a blend of solvent dyes in a polyester carrier, and 95 wt% dried PET. The compositions of the A-layers and B-layers for Samples 44-45 and Comparative Sample 17 are shown in Table 21.

**Table 21**

| Sample | 44 | 44 | 45 | 45 | Comp 17 | Comp 17 |
|---|---|---|---|---|---|---|
| Layer | A | B | A | B | A | B |
| COC (wt%) | 4.000 | - | 2.000 | - | 5.000 | - |
| ZnS (wt%) | 1.000 | - | 2.000 | - | - | - |
| Red dye MACROLEX® RED EG, SR 135) (wt%) | - | - | - | - | 0.050 | - |
| Dye based Black MB (wt%) | - | 5.000 | - | 5.000 | - | 5.000 |
| PET (wt%) | 95.000 | 95.000 | 96.000 | 95.000 | 94.950 | 94.900 |

The compositions of Samples 44-45 and Comparative Sample 17 were stretch oriented into bottles with an estimated total area draw ratio of $11.0x^2$. Samples 44-45 and Comparative Sample 17 were assessed for whiteness / color values, light transmission, gonioappearance, gloss, and layer thickness, and the results are shown in Table 22.

**Table 22**

| Sample | 44 | 45 | Comp 17 |
|---|---|---|---|
| L* | 71.6 | 74.2 | 59.1 |
| a* | -1.5 | -1.9 | 18.4 |
| b* | -7.2 | -7.6 | 2.8 |
| %LT | 0.04 | 0.14 | 0.04 |
| Circumferential $DE_{CMC}$ | 6.9 | 9.9 | 15.2 |
| Axial $DE_{CMC}$ | 8.0 | 9.2 | 15.6 |
| 20° Gloss | 2 | 3 | 4 |
| 60° Gloss | 15 | 27 | 34 |
| 85° Gloss | 71 | 80 | 85 |
| A-Layer Exterior Thickness (%) | 43 | 41 | 41 |
| B-Layer Core Thickness (%) | 18 | 26 | 21 |
| A-layer Interior Thickness (%) | 39 | 33 | 38 |

Samples 44-45 showed surprisingly advantageous results, including demonstrating that only one layer of a multi-layer structure needs to contain an incompatible polymer in order to yield an article that is white, opaque, and non-pearlescent. Comparative Sample 17 shows that adding a colorant, such that the CIELAB a* or b* value is no longer inside the range of ± 10 units, causes the article to appear pearlescent.

**Example 9**

Comparative Sample 18, a stretch oriented bottle, was prepared by hand mixing: 13.33 wt% of a masterbatch containing 60 wt% $TiO_2$ (TIPAQUE® A-100) and a polyester carrier; 0.10 wt% Yellow Dye (MACROLEX® YELLOW 3G, SY-93); and 86.57 wt% dried PET (PQB7) in a bag, and then feeding the mixture into the feed throat of a Nissei ASB-50M single stage blow molder under the following processing conditions: PET dryer temperature (300°F); PET dryer dew point (-42°F); bag shake; recovery (175 RPM); extruder barrel temperature (280°C); injection time (9 sec); hot runner temperature (280°C); cooling time (5.5 sec); preform cool temperature (64°F); conditioning pot temperature (180°C); and conditioning time (12 sec).

The orientation of Comparative Sample 18 was estimated to be 3.3x axial and 3.3x circumferential for a total area draw ratio of 10.9x$^2$.

Sample 40 (described above), Comparative Sample 9 (described above), and Comparative Sample 18 were tested to determine the presence of volatile non-intentionally added substances (NIAS). *See* Franz et al., "Investigation of non-intentionally added substances (NIAS) in PET bottles and closures," Fraunhofer Institute for Process Engineering and Packaging (IVV), poster presentation at the 4th international Symposium on Food Packaging (November 2008). 1 g of each sample, taken from the fully oriented sidewall (specifically, the sidewall of Bottle B for each of Sample 40 and Comparative Sample 9), was transferred to 20 ml headspace vials and incubated at 200°C for 1 hour to release any volatile components. Identification of the volatile organic compounds was performed by a coupling of headspace GC with MS and FID spectrometry (MS - Agilent 7890B Gas Chromatograph with FID and 5977A Mass Selective Detector). Analysis of the mass spectra was done by comparison with the NIST17 spectra library. The results of the headspace chemical identification showed the detected presence of various NIAS in each of Sample 40, Comparative Sample 9, and Comparative Sample 18.

Sample 40 showed surprisingly advantageous results because only 11 volatile compounds were detected. In contrast, 21 volatile compounds were detected in Comparative Sample 9, and 19 volatile compounds were detected in Comparative Sample 18. Accordingly, the data demonstrate that compositions comprising an incompatible polymer and zinc sulfide without TiO$_2$ significantly reduces the number of NIAS generated as compared to compositions that contain TiO$_2$.

## Example 10

This example demonstrates a significant improvement in infrared (IR) reheat performance achieved by a representative article made from a composition that does not contain TiO$_2$. To compare IR reheat performance, an injection molder was used to make a series of flat, rectangular articles using conditions similar to those used in an injection stretch blow molding machine. Flat samples were made over a range of thicknesses from 0.15 mm to 2.9 mm. Each thickness was measured for spectral reflection and transmission using a Cary 5000 UV-Vis-IR spectrophotometer. Spectral absorption values were calculated using the following equation:

$$\text{Absorption \%}_\lambda = 100\,\% - \text{Reflection \%}_\lambda - \text{Transmission \%}_\lambda$$

The spectral absorption profile was multiplied by the theoretical spectral emission of an IR reheat lamp (E$_\lambda$) and integrated over all measurable wavelengths ($\lambda$) to calculate the expected absorption for a given depth / thickness (t) using the following formula:

$$Absorption_t = \sum_{\lambda=300}^{2500nm} Abs\%_{t,\lambda} \times E_\lambda$$

By calculating absorption at each thickness, the depth of absorption was estimated.

Samples 46 and 47 each comprised 93-95 wt% PET, less than 0.5 wt% colorant, 3-5 wt% COC, and 1-2 wt% PMP

Comparative Sample 19 comprised 93.78 wt% dried PET, 6.10 wt% TiO$_2$, 0.04 wt% aluminum flake, and 0.08 wt% other colorants.

The absorption depth profile for each of Samples 46-47 and Comparative Sample 19 was calculated as indicated above, and the results are shown in Table 23, which identifies the percentage of IR light absorbed at various thicknesses.

**Table 23**

| Thickness (mm) | Sample 46 | Sample 47 | Comp 19 |
|---|---|---|---|
| 0.15 | 25.2% | 9.3% | 55.5% |
| 0.25 | 31.4% | 14.8% | 65.0% |
| 0.41 | 52.0% | 22.3% | 82.2% |
| 0.56 | 60.7% | 56.8% | 91.2% |
| 0.76 | 69.6% | 40.7% | 92.1% |
| 1.45 | 91.9% | 67.0% | 100.0% |
| 2.26 | 98.6% | 83.3% | 97.7% |

(continued)

| Thickness (mm) | Sample 46 | Sample 47 | Comp 19 |
|---|---|---|---|
| 2.90 | 100.0% | 100.0% | 99.0% |

Samples 46-47, which did not include any $TiO_2$, showed surprisingly advantageous results, including demonstrating that less than 33% of the IR light was absorbed within the first (outermost) 0.25 mm. Therefore, most of the heat effectively penetrated into the article, allowing uniform heat distribution and a wider operating window for reheat stretch blow molding. Comparative Sample 19, which contained $TiO_2$, showed that over 50% of the IR light was absorbed within the first 0.15 mm. This may lead to over-heating at the surface, non-uniform heat distribution, and a narrow operating window for reheat stretch blow molding.

**Claims**

1. An oriented article comprising one or more layers, wherein at least one layer is a composition comprising:

   polyester;
   incompatible polymer selected from COC, partially or fully hydrogenated styrenic polymers and copolymers, and combinations thereof; and
   0-8 wt% light scattering pigment, based on the total weight of the composition;
   wherein the article is oriented, the layer has an average light transmission percentage determined as disclosed in the description of about 20% or less for light having wavelengths in the range of 400nm to 700nm, and the layer has a non-pearlescent appearance of less than 15 units, measured as $DE_{CMC}$ with a 45° incident light source between 15° near-specular reflection and 110° far specular reflection as disclosed in the description.

2. The article of claim 1, wherein:

   (a) the layer has a non-pearlescent appearance of less than 10 units, measured as $DE_{CMC}$ with a 45° incident light source between 15° near-specular reflection and 110° far specular reflection as disclosed in the description; and/or
   (b) the incompatible polymer has a Vicat Softening Point that is higher than the orientation temperature of the article, wherein the Vicat Softening Point is measured according to ASTM D1525 with a 1 kg load and a 50°C/hour heating rate; and/or
   (c) the layer is white with a CIELAB a* value determined as disclosed in the description within the range of $\pm$ 10 units, and a CIELAB b* value determined as disclosed in the description within the range of $\pm$ 10 units; and/or
   (d) the polyester is polyethylene terephthalate (PET).

3. The article of claim 1 or 2, wherein the composition comprises at least 85 wt% polyester, based on the total weight of the composition and/or about 15 wt% or less incompatible polymer, based on the total weight of the composition.

4. The article of any one of claims 1-3, wherein the incompatible polymer comprises a hydrogenated styrenic polymer.

5. The article of any one of claims 1-3, wherein the incompatible polymer comprises COC.

6. The article of any one of claims 1-5, wherein the composition comprises no titanium dioxide.

7. The article of any one of claims 1-6, wherein: (a) the composition comprises no more than 1 wt% of mineral filler, based on the total weight of the composition; or (b) the light scattering pigment comprises zinc sulfide present in an amount of about 4 wt% or less, based on the total weight of the composition.

8. The article of any one of claims 1-5 and 7, wherein the composition comprises titanium dioxide.

9. The article of any one of claims 1-8, wherein the composition comprises no more than 0.1 wt% light scattering pigment, based on the total weight of the composition.

10. The article of any one of claims 1-9, wherein:

(a) the composition further comprises an additive or colorant;

(b) the composition further comprises an additive selected from anti-block agents, anti-oxidants, anti-stats, slip agents, chain extenders, cross linking agents, flame retardants, IV reducers, laser marking additives, mold release, optical brighteners, flow aids, plasticizers, nucleating agents, oxygen scavengers, anti-microbials, UV stabilizers, and combinations thereof; and/or

(c) the composition further comprises a colorant selected from dyes, organic pigments, inorganic pigments, and combinations thereof, preferably wherein the colorant comprises aluminum or a combination of dyes.

11. The article of any one of claims 1-10, wherein the article is a container.

12. A method of manufacturing an article, comprising the steps of:

(a) melt blending polyester with incompatible polymer selected from COC, partially or fully hydrogenated styrenic polymers and copolymers, and combinations thereof to produce a composition comprising about 15 wt% or less of incompatible polymer, based on the total weight of the composition, preferably wherein at least one additive or colorant is added to the composition during step (a);

(b) subjecting the composition to orientation stress at a temperature below the Vicat Softening Point of the incompatible polymer, wherein the Vicat Softening Point is measured according to ASTM D1525 with a 1 kg load and a 50°C/hour heating rate; and

(c) producing an article that is visually non-pearlescent and has a light transmission percentage determined as disclosed in the description of less than 20% for light having wavelengths in the range of 400nm to 700nm.

13. An oriented, white article comprising one or more layers, wherein at least one layer is a composition comprising, based on the total weight of the composition:

at least 91.5 wt% polyethylene terephthalate (PET);

less than 4 wt% incompatible polymer selected from COC and hydrogenated styrenic polymers;

less than 4 wt% mineral filler selected from titanium dioxide ($TiO_2$) and zinc sulfide (ZnS); and

less than 0.5 wt% additional component selected from colorants and additives;

wherein the article is oriented; the article has a light transmission percentage determined as disclosed in the description of less than 20% for light having wavelengths in the range of 400nm to 700nm; the layer has a non-pearlescent appearance of less than 10 units measured as $DE_{CMC}$ with a 45° incident light source between 15° near-specular reflection and 110° far specular reflection as disclosed in the description; and the layer has a CIELAB a* value determined as disclosed in the description within the range of ±10 units, and a CIELAB b* value determined as disclosed in the description within the range of ±10 units,

preferably wherein the composition comprises less than 1 wt% $TiO_2$ and less than 3 wt% ZnS.

14. An oriented article comprising one or more layers, wherein at least one layer is a composition comprising, based on the total weight of the composition:

at least 91.5 wt% polyethylene terephthalate (PET);

less than 4 wt% incompatible polymer selected from COC and hydrogenated styrenic polymers;

less than 4 wt% zinc sulfide (ZnS); and

less than 0.5 wt% additional component selected from colorants and additives;

wherein the composition does not contain titanium dioxide; the article is oriented; the article has a light transmission percentage determined as disclosed in the description of less than 20% for light having wavelengths in the range of 400nm to 700nm; and the layer has a non-pearlescent appearance of less than 10 units measured as $DE_{CMC}$ with a 45° incident light source between 15° near-specular reflection and 110° far specular reflection as disclosed in the description.

15. An oriented article comprising one or more layers, wherein at least one layer is a composition comprising, based on the total weight of the composition:

at least 91.5 wt% polyethylene terephthalate (PET);

about 1 wt% to about 5 wt% incompatible polymer selected from COC and hydrogenated styrenic polymers;

about 1 wt% to about 3 wt% polymethylpentene (PMP); and

less than 0.5 wt% additional component selected from colorants and additives;

wherein the composition does not contain titanium dioxide or zinc sulfide; the article is oriented; the article has a light transmission percentage determined as disclosed in the description of less than 20% for light having wavelengths in the range of 400nm to 700nm; and the layer has a non-pearlescent appearance of less than 10 units $DE_{CMC}$ measured as $DE_{CMC}$ with a 45° incident light source between 15° near-specular reflection and 110° far specular reflection as disclosed in the description,

preferably wherein the additional component comprises a non-mineral selected from aluminum and organic dyes.

## Patentansprüche

1. Orientierter Artikel, der eine oder mehrere Schichten umfasst, wobei mindestens eine Schicht eine Zusammensetzung ist, die Folgendes umfasst:

   Polyester;
   inkompatibles Polymer, ausgewählt aus COC, teilweise oder vollständig hydrierten Styrolpolymeren und -copolymeren und Kombinationen davon; und
   0-8 Gew.-% lichtstreuendes Pigment, bezogen auf das Gesamtgewicht der Zusammensetzung;
   wobei der Artikel orientiert ist, die Schicht einen durchschnittlichen Lichttransmissionsprozentsatz, bestimmt wie in der Beschreibung offenbart, von etwa 20 % oder weniger für Licht mit Wellenlängen im Bereich von 400 nm bis 700 nm aufweist, und die Schicht ein nicht-perlglänzendes Aussehen von weniger als 15 Einheiten aufweist, gemessen als $DE_{CMC}$ mit einer mit 45° einfallenden Lichtquelle zwischen 15° Nahspiegelreflexion und 110° Fernspiegelreflexion, wie in der Beschreibung offenbart.

2. Artikel nach Anspruch 1, wobei:

   (a) die Schicht ein nicht-perlglänzendes Aussehen von weniger als 10 Einheiten aufweist, gemessen als $DE_{CMC}$ mit einer mit 45° einfallenden Lichtquelle zwischen 15° Nahspiegelreflexion und 110° Fernspiegelreflexion, wie in der Beschreibung offenbart; und/oder
   (b) das inkompatible Polymer einen Vicat-Erweichungspunkt aufweist, der höher ist als die Orientierungstemperatur des Artikels, wobei der Vicat-Erweichungspunkt gemäß ASTM D1525 mit einer Belastung von 1 kg und einer Erwärmungsrate von 50°C/Stunde gemessen wird; und/oder
   (c) die Schicht weiß ist und einen CIELAB a*-Wert, der wie in der Beschreibung angegeben bestimmt wird, innerhalb des Bereichs von ± 10 Einheiten aufweist, und einen CIELAB b*-Wert, der wie in der Beschreibung angegeben bestimmt wird, innerhalb des Bereichs von ± 10 Einheiten aufweist; und/oder
   (d) der Polyester Polyethylenterephthalat (PET) ist.

3. Artikel nach Anspruch 1 oder 2, wobei die Zusammensetzung mindestens 85 Gew.-% Polyester, bezogen auf das Gesamtgewicht der Zusammensetzung, und/oder etwa 15 Gew.-% oder weniger inkompatibles Polymer, bezogen auf das Gesamtgewicht der Zusammensetzung, umfasst.

4. Artikel nach einem der Ansprüche 1 bis 3, wobei das inkompatible Polymer ein hydriertes Styrolpolymer umfasst.

5. Artikel nach einem der Ansprüche 1 bis 3, wobei das inkompatible Polymer COC umfasst.

6. Artikel nach einem der Ansprüche 1 bis 5, wobei die Zusammensetzung kein Titandioxid umfasst.

7. Artikel nach einem der Ansprüche 1 bis 6, wobei: (a) die Zusammensetzung nicht mehr als 1 Gew.-% an mineralischem Füllstoff, bezogen auf das Gesamtgewicht der Zusammensetzung, umfasst; oder (b) das lichtstreuende Pigment Zinksulfid in einer Menge von etwa 4 Gew.-% oder weniger, bezogen auf das Gesamtgewicht der Zusammensetzung, umfasst.

8. Artikel nach einem der Ansprüche 1 bis 5 und 7, wobei die Zusammensetzung kein Titandioxid umfasst.

9. Artikel nach einem der Ansprüche 1 bis 8, wobei die Zusammensetzung nicht mehr als 0,1 Gew.-% lichtstreuendes Pigment, bezogen auf das Gesamtgewicht der Zusammensetzung, umfasst.

10. Artikel nach einem der Ansprüche 1 bis 9, wobei:

    (a) die Zusammensetzung ferner einen Zusatzstoff oder ein Farbmittel umfasst;

(b) die Zusammensetzung ferner ein Additiv umfasst, das aus den folgenden ausgewählt ist: Antiblockmitteln, Antioxidantien, Antistatika, Gleitmitteln, Kettenverlängerern, Vernetzungsmitteln, Flammschutzmitteln, IV-Reduzierern, Lasermarkierungsadditiven, Formtrennmitteln, optischen Aufhellern, Fließhilfen, Weichmachern, Nukleierungsmitteln, Sauerstofffängern, antimikrobiellen Mitteln, UV-Stabilisatoren und Kombinationen davon; und/oder

(c) die Zusammensetzung ferner ein Farbmittel umfasst, ausgewählt aus Farbstoffen, organischen Pigmenten, anorganischen Pigmenten und Kombinationen davon, wobei das Farbmittel vorzugsweise Aluminium oder eine Kombination von Farbstoffen umfasst.

11. Artikel nach einem der Ansprüche 1 bis 10, wobei der Artikel ein Behälter ist.

12. Verfahren zur Herstellung eines Artikels, das die folgenden Schritte umfasst:

(a) Schmelzmischen von Polyester mit inkompatiblem Polymer, ausgewählt aus COC, teilweise oder vollständig hydrierten Styrolpolymeren und -copolymeren und Kombinationen davon, zur Herstellung einer Zusammensetzung, die etwa 15 Gew.-% oder weniger inkompatibles Polymer, bezogen auf das Gesamtgewicht der Zusammensetzung, umfasst, vorzugsweise wobei mindestens ein Additiv oder Farbstoff der Zusammensetzung während Schritt (a) zugesetzt wird;

(b) Unterwerfen der Zusammensetzung einer Orientierungsspannung bei einer Temperatur unterhalb des Vicat-Erweichungspunktes des inkompatiblen Polymers, wobei der Vicat-Erweichungspunkt gemäß ASTM D1525 mit einer Belastung von 1 kg und einer Erwärmungsrate von 50°C/Stunde gemessen wird; und

(c) Herstellen eines Artikels, der visuell nicht perlglänzend ist und einen Lichtdurchlässigkeits-Prozentsatz, bestimmt wie in der Beschreibung offenbart, von weniger als 20% für Licht mit Wellenlängen im Bereich von 400 nm bis 700 nm aufweist.

13. Orientierter, weißer Artikel, der eine oder mehrere Schichten umfasst, wobei mindestens eine Schicht eine Zusammensetzung ist, die, basierend auf dem Gesamtgewicht der Zusammensetzung, Folgendes umfasst:

mindestens 91,5 Gew.-% Polyethylenterephthalat (PET);
weniger als 4 Gew.-% inkompatibles Polymer, ausgewählt aus COC und hydrierten Styrolpolymeren;
weniger als 4 Gew.-% eines mineralischen Füllstoffs, ausgewählt aus Titandioxid ($TiO_2$) und Zinksulfid (ZnS); und
weniger als 0,5 Gew.-% einer zusätzlichen Komponente, ausgewählt aus Farbstoffen und Additiven;
wobei der Artikel orientiert ist; der Artikel einen wie in der Beschreibung angegebenen Prozentsatz an Lichtdurchlässigkeit von weniger als 20 % für Licht mit Wellenlängen im Bereich von 400 nm bis 700 nm aufweist; und die Schicht ein nicht-perlglänzendes Aussehen von weniger als 10 Einheiten aufweist, gemessen als $DE_{CMC}$ mit einer mit 45° einfallenden Lichtquelle zwischen 15° Nahspiegelreflexion und 110° Fernspiegelreflexion, wie in der Beschreibung offenbart; und die Schicht einen CIELAB a*-Wert, der wie in der Beschreibung angegeben bestimmt wird, innerhalb des Bereichs von $\pm$ 10 Einheiten aufweist, und einen CIELAB b*-Wert, der wie in der Beschreibung angegeben bestimmt wird, innerhalb des Bereichs von $\pm$ 10 Einheiten aufweist, wobei die Zusammensetzung vorzugsweise weniger als 1 Gew.-% $TiO_2$ und weniger als 3 Gew.-% ZnS umfasst.

14. Orientierter Artikel, der eine oder mehrere Schichten umfasst, wobei mindestens eine Schicht eine Zusammensetzung ist, die, basierend auf dem Gesamtgewicht der Zusammensetzung, Folgendes umfasst:

mindestens 91,5 Gew.-% Polyethylenterephthalat (PET);
weniger als 4 Gew.-% inkompatibles Polymer, ausgewählt aus COC und hydrierten Styrolpolymeren;
weniger als 4 Gewichtsprozent Zinksulfid (ZnS); und
weniger als 0,5 Gew.-% einer zusätzlichen Komponente, ausgewählt aus Farbstoffen und Additiven;
wobei die Zusammensetzung kein Titandioxid umfasst; der Artikel orientiert ist;

der Artikel einen wie in der Beschreibung angegebenen Prozentsatz an Lichtdurchlässigkeit von weniger als 20 % für Licht mit Wellenlängen im Bereich von 400 nm bis 700 nm aufweist; und die Schicht ein nicht-perlglänzendes Aussehen von weniger als 10 Einheiten aufweist, gemessen als $DE_{CMC}$ mit einer mit 45° einfallenden Lichtquelle zwischen 15° Nahspiegelreflexion und 110° Fernspiegelreflexion, wie in der Beschreibung offenbart.

15. Orientierter Artikel, der eine oder mehrere Schichten umfasst, wobei mindestens eine Schicht eine Zusammensetzung ist, die, basierend auf dem Gesamtgewicht der Zusammensetzung, Folgendes umfasst:

mindestens 91,5 Gew.-% Polyethylenterephthalat (PET);
etwa 1 Gew.-% bis etwa 5 Gew.-% inkompatibles Polymer, ausgewählt aus COC und hydrierten Styrolpolymeren;
etwa 1 Gew.-% bis etwa 3 Gew.-% Polymethylpenten (PMP); und
weniger als 0,5 Gew.-% einer zusätzlichen Komponente, ausgewählt aus Farbstoffen und Additiven;
wobei die Zusammensetzung kein Titandioxid oder Zinksulfid umfasst; der Artikel orientiert ist; der Artikel einen wie in der Beschreibung angegebenen Prozentsatz an Lichtdurchlässigkeit von weniger als 20 % für Licht mit Wellenlängen im Bereich von 400 nm bis 700 nm aufweist; und die Schicht ein nicht-perlglänzendes Aussehen von weniger als 10 Einheiten DE$_{CMC}$ aufweist, gemessen als DE$_{CMC}$ mit einer mit 45° einfallenden Lichtquelle zwischen 15° Nahspiegelreflexion und 110° Fernspiegelreflexion, wie in der Beschreibung offenbart,
wobei die zusätzliche Komponente vorzugsweise ein Nicht-Mineral umfasst, das aus Aluminium und organischen Farbstoffen ausgewählt ist.

## Revendications

1. Article orienté comprenant une ou plusieurs couches, dans lequel au moins une couche est une composition comprenant :

   du polyester ;
   un polymère incompatible choisi parmi le COC, des polymères et copolymères styréniques partiellement ou totalement hydrogénés, et leurs combinaisons ; et
   0 à 8% en poids de pigment diffusant la lumière, sur la base du poids total de la composition ; dans lequel l'article est orienté, la couche a un pourcentage de transmission lumineuse moyen déterminé comme décrit dans la description d'environ 20% ou moins pour la lumière ayant des longueurs d'onde dans la plage de 400nm à 700nm, et la couche a un aspect non nacré inférieur à 15 unités, mesuré en DE$_{CMC}$ avec une source de lumière incidente à 45° entre 15° de réflexion spéculaire proche et 110° de réflexion spéculaire lointaine comme décrit dans la description.

2. Article selon la revendication 1, dans lequel :

   (a) la couche a un aspect non nacré inférieur à 10 unités, mesuré en DE$_{CMC}$ avec une source de lumière incidente à 45° entre 15° de réflexion spéculaire proche et 110° de réflexion spéculaire lointaine comme indiqué dans la description ; et/ou
   (b) le polymère incompatible a un point de ramollissement Vicat qui est supérieur à la température d'orientation de l'article, dans lequel le point de ramollissement Vicat est mesuré selon la norme ASTM D1525 avec une charge de 1 kg et une vitesse de chauffage de 50 °C/heure ; et/ou
   (c) la couche est blanche avec une valeur CIELAB a* déterminée comme indiqué dans la description dans la plage de ±10 unités, et une valeur CIELAB b* déterminée comme indiqué dans la description dans la plage de ±10 unités ; et/ou
   (d) le polyester est du polyéthylène téréphtalate (PET).

3. Article selon la revendication 1 ou 2, dans lequel la composition comprend au moins 85% en poids de polyester, sur la base du poids total de la composition et/ou environ 15% en poids ou moins de polymère incompatible, sur la base du poids total de la composition.

4. Article selon l'une quelconque des revendications 1 à 3, dans lequel le polymère incompatible comprend un polymère styrénique hydrogéné.

5. Article selon l'une quelconque des revendications 1 à 3, dans lequel le polymère incompatible comprend du COC.

6. Article selon l'une quelconque des revendications 1 à 5, dans lequel la composition ne comprend pas de dioxyde de titane.

7. Article selon l'une quelconque des revendications 1 à 6, dans lequel (a) la composition ne comprend pas plus de 1% en poids de charge minérale, sur la base du poids total de la composition ; ou (b) le pigment diffusant la lumière comprend du sulfure de zinc présent en une quantité d'environ 4% en poids ou moins, sur la base du poids total de la composition.

**8.** Article selon l'une quelconque des revendications 1 à 5 et 7, dans lequel la composition comprend du dioxyde de titane.

**9.** Article selon l'une quelconque des revendications 1 à 8, dans lequel la composition ne comprend pas plus de 0,1% en poids de pigment diffusant la lumière, sur la base du poids total de la composition.

**10.** Article selon l'une quelconque des revendications 1 à 9, dans lequel :

(a) la composition comprend en outre un additif ou un colorant ;
(b) la composition comprend en outre un additif choisi parmi les agents anti-adhérents, les antioxydants, les agents antistatiques, les agents glissants, les allongeurs de chaîne, les agents de réticulation, les retardateurs de flamme, les réducteurs IV, les additifs de marquage laser, les agents de démoulage, les azurants optiques, les auxiliaires d'écoulement, les plastifiants, les agents de nucléation, les désoxygénant, les antimicrobiens, les stabilisants UV et leurs combinaisons ; et/ou
(c) la composition comprend en outre un colorant choisi parmi les colorants, les pigments organiques, les pigments inorganiques et leurs combinaisons, de préférence dans lequel le colorant comprend de l'aluminium ou une combinaison de colorants.

**11.** Article selon l'une quelconque des revendications 1 à 10, dans lequel l'article est un conteneur.

**12.** Procédé de fabrication d'un article, comprenant les étapes consistant à :

(a) mélanger à l'état fondu un polyester avec un polymère incompatible choisi parmi le COC, les polymères et copolymères styréniques partiellement ou totalement hydrogénés, et leurs combinaisons pour produire une composition comprenant environ 15% en poids ou moins de polymère incompatible, par rapport au poids total de la composition, de préférence dans lequel au moins un additif ou colorant est ajouté à la composition au cours de l'étape (a) ;
(b) soumettre la composition à une contrainte d'orientation à une température inférieure au point de ramollissement Vicat du polymère incompatible, dans lequel le point de ramollissement Vicat est mesuré selon la norme ASTM D1525 avec une charge de 1 kg et une vitesse de chauffage de 50°C/heure ; et
(c) produire un article qui n'est visuellement pas nacré et a un pourcentage de transmission lumineuse déterminé comme décrit dans la description de moins de 20% pour la lumière ayant des longueurs d'onde dans la plage de 400nm à 700nm.

**13.** Article blanc orienté comprenant une ou plusieurs couches, dans lequel au moins une couche est une composition comprenant, sur la base du poids total de la composition :

au moins 91,5% en poids de polyéthylène téréphtalate (PET) ;
moins de 4% en poids de polymère incompatible choisi parmi le COC et les polymères styréniques hydrogénés ;
moins de 4% en poids de charge minérale choisie parmi le dioxyde de titane ($TiO_2$) et le sulfure de zinc (ZnS) ; et
moins de 0,5% en poids de composant supplémentaire choisi parmi les colorants et les additifs ;
dans lequel l'article est orienté ; l'article a un pourcentage de transmission lumineuse déterminé comme décrit dans la description de moins de 20% pour la lumière ayant des longueurs d'onde dans la plage de 400nm à 700nm ; la couche a un aspect non nacré inférieur à 10 unités mesuré en $DE_{CMC}$ avec une source lumineuse incidente à 45° entre 15° de réflexion spéculaire proche et 110° de réflexion spéculaire lointaine comme décrit dans la description ; et la couche a une valeur CIELAB a* déterminée comme indiqué dans la description dans la plage de ±10 unités, et une valeur CIELAB b* déterminée comme indiqué dans la description dans la plage de ±10 unités,
de préférence dans lequel la composition comprend moins de 1% en poids de $TiO_2$ et moins de 3% en poids de ZnS.

**14.** Article orienté comprenant une ou plusieurs couches, dans lequel au moins une couche est une composition comprenant, sur la base du poids total de la composition :

au moins 91,5% en poids de polyéthylène téréphtalate (PET) ;
moins de 4% en poids de polymère incompatible choisi parmi le COC et les polymères styréniques hydrogénés ;
moins de 4% en poids de sulfure de zinc (ZnS) ; et
moins de 0,5% en poids de composant supplémentaire choisi parmi les colorants et les additifs ;

dans lequel la composition ne contient pas de dioxyde de titane ; l'article est orienté ; l'article a un pourcentage de transmission lumineuse déterminé comme indiqué dans la description de moins de 20% pour la lumière ayant des longueurs d'onde dans la plage de 400nm à 700nm ;

et la couche a un aspect non nacré de moins de 10 unités mesuré en $DE_{CMC}$ avec une source de lumière incidente à 45° entre 15° de réflexion spéculaire proche et 110° de réflexion spéculaire lointaine comme décrit dans la description.

**15.** Article orienté comprenant une ou plusieurs couches, dans lequel au moins une couche est une composition comprenant, sur la base du poids total de la composition :

au moins 91,5% en poids de polyéthylène téréphtalate (PET) ;

environ 1% en poids à environ 5% en poids de polymère incompatible choisi parmi le COC et les polymères styréniques hydrogénés ;

environ 1% en poids à environ 3% en poids de polyméthylpentène (PMP) ; et

moins de 0,5% en poids de composant supplémentaire choisi parmi les colorants et les additifs ;

dans lequel la composition ne contient pas de dioxyde de titane ou de sulfure de zinc; l'article est orienté ; l'article a un pourcentage de transmission lumineuse déterminé comme décrit dans la description de moins de 20% pour la lumière ayant des longueurs d'onde dans la plage de 400nm à 700nm ; et la couche a un aspect non nacré de moins de 10 unités $DE_{CMC}$ mesuré en $DE_{CMC}$ avec une source de lumière incidente à 45° entre 15° de réflexion spéculaire proche et 110° de réflexion spéculaire lointaine comme indiqué dans la description, de préférence dans lequel le composant supplémentaire comprend un non minéral choisi parmi l'aluminium et les colorants organiques.

FIG. 1

FIG. 2

Matrix
Polymer

Incompatible
Polymer

**FIG. 3**

Matrix
Polymer

Incompatible
Polymer

Internal
Void

**FIG. 4**

10 µm

**FIG. 5**

**FIG. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019133713 A

**Non-patent literature cited in the description**

- **HUNTER LAB.** Insight on Color. *Applications Note,* 2008, vol. 8 (7

- Investigation of non-intentionally added substances (NIAS) in PET bottles and closures. **FRANZ et al.** 4th international Symposium on Food Packaging. Fraunhofer Institute for Process Engineering and Packaging (IVV), November 2008